# EUROPEAN PATENT APPLICATION

(11) **EP 4 718 056 A1**
(43) Date of publication of application: **01.04.2026**
(21) Application number: 25204725.3
(22) Date of filing: 25.09.2025
(51) Int. Cl.: G01N 15/1429, G01N 15/14, G01N 15/149, G01N 21/17

(54) **METHODS FOR DETECTOR GAIN MODULATION AND SYSTEMS FOR SAME**

(30) Priority: 26.09.2024 US 202463699320 P
(71) Applicant: Becton Dickinson and Company, Franklin Lakes, NJ 07417-1880 (US)
(72) Inventor: Welsh, Joshua A., Franklin Lakes, 07417-1880 (US)
(74) Representative: Arnold & Siedsma

(57) **Abstract**

Aspects of the present disclosure include methods for modulating a photodetector in a light detection system (e.g., in a flow cytometer). Methods according to the present disclosure include irradiating with a light source a sample having particles in a flow stream, detecting light from the particles in the sample with a photodetector where the voltage of the photodetector is modulated between a first voltage and a second voltage at a modulation frequency, generating data signals from the light detected from the particles at one or more of the first photodetector voltage and at the second photodetector voltage and determining one or more parameters of the particle from the generated data signals. Systems and non-transitory computer-readable storage media configured to carry out the subject methods are also provided.

## Description

### CROSS-REFERENCE TO RELATED APPLICATION

This application claims priority to the filing date of United States Provisional Patent Application Serial No. 63/699,320 filed September 26, 2024.

### INTRODUCTION

The characterization of analytes in biological fluids has become an important part of biological research, medical diagnoses and assessments of overall health and wellness of a patient. Detecting analytes in biological fluids, such as human blood or blood derived products, can provide results that may play a role in determining a treatment protocol of a patient having a variety of disease conditions.

Flow cytometry is a technique used to characterize and often times sort biological material, such as cells of a blood sample or particles of interest in another type of biological or chemical sample. A flow cytometer typically includes a sample reservoir for receiving a fluid sample, such as a blood sample, and a sheath reservoir containing a sheath fluid. The flow cytometer transports the particles (including cells) in the fluid sample as a cell stream to a flow cell, while also directing the sheath fluid to the flow cell. To characterize the components of the flow stream, the flow stream is irradiated with light. Variations in the materials in the flow stream, such as morphologies or the presence of fluorescent labels, may cause variations in the observed light and these variations allow for characterization and separation. To characterize the components in the flow stream, light must impinge on the flow stream and be collected. Light sources in flow cytometers can vary and may include one or more broad spectrum lamps, light emitting diodes as well as single wavelength lasers. The light source is aligned with the flow stream and an optical response from the illuminated particles is collected and quantified.

Isolation of biological particles has been achieved by adding a sorting or collection capability to flow cytometers. Particles in a segregated stream, detected as having one or more desired characteristics, are individually isolated from the sample stream by mechanical or electrical removal. A common flow sorting technique utilizes drop sorting in which a fluid stream containing linearly segregated particles is broken into drops. The drops containing particles of interest are electrically charged and deflected into a collection tube by passage through an electric field. Typically, the linearly segregated particles in the stream are characterized as they pass through an observation point situated just below the nozzle tip. Once a particle is identified as meeting one or more desired criteria, the time at which it will reach the drop break-off point and break from the stream in a drop can be predicted. Ideally, a brief charge is applied to the fluid stream just before the drop containing the selected particle breaks from the stream and then grounded immediately after the drop breaks off. The drop to be sorted maintains an electrical charge as it breaks off from the fluid stream, and all other drops are left un-charged.

Flow cytometers measure signals using arbitrary units. They are capable of analyzing a variety of cell types that span a large size and refractive index range. The most common parameters to trigger data on and optimize initially for any flow cytometry experiment are light scatter. The optimal adjustment of these parameters, depending on the population(s) of interest, generally requires training and may be nuanced or subjective between individuals when tradeoffs have to be made due to limited detector dynamic ranges. Light detection systems in conventional flow cytometers having approximately 4 decades of dynamics range at a given setting, while the range of detectable cell sizes being catered to by flow cytometry applications spans at least 7 decades. Photodetectors across their useable settings can differ in their limit of detection by ~4.5 decades meaning their total dynamic range can span as much as 8-9 decades.

### SUMMARY

The present disclosure is related to a method for modulating a photodetector in a light detection system (e.g., in a flow cytometer). The present disclosure includes irradiating with a light source a sample having particles in a flow stream, detecting light from the particles in the sample with a photodetector where the voltage of the photodetector is modulated between a first voltage and a second voltage at a modulation frequency, generating data signals from the light detected from the particles at one or more of the first photodetector voltage and at the second photodetector voltage and determining one or more parameters of the particle from the generated data signals. A system and non-transitory computer-readable storage media configured to carry out the subject methods are also provided.

The voltage of the photodetector may be modulated between the first voltage and the second voltage at a frequency of from 0.005 MHz to 10 MHz. The voltage of the photodetector may be modulated between the first voltage and the second voltage at a frequency of from 0.1 MHz to 1 MHz. The voltage of the photodetector may be maintained for 1 µs or less per period, such as for 0.5 µs or less per period., the first photodetector voltage is higher than the second photodetector voltage. The first photodetector voltage may be from 500 mV to 2000 mV, such as from 600 mV to 1800 mV. The second photodetector voltage may be from 0.001 mV to 500 mV, such as from 1 mV to 400 mV.

The voltage of the photodetector may be modulated between the first photodetector voltage and the second photodetector voltage with a square-form voltage change. The method may include generating data signals from the light detected at the first photodetector voltage. The method may include generating data signals from the light detected at the second photodetector voltage. The method may include generating data signals from the light detected at the first photodetector voltage and light detected at the second photodetector voltage. Data signals may be generated from the light detected at the second photodetector voltage when the light detected at the first photodetector voltage exhibits a detector saturation level greater than a saturation threshold. Data signals may be generated only from the light detected at the second photodetector voltage when the light detected at the first photodetector voltage exhibits a detector saturation level greater than a saturation threshold. The method may include detecting light with the photodetector only at the second photodetector voltage when the light detected at the first photodetector voltage exhibits a detector saturation level greater than a saturation threshold.

The method may include measuring a baseline sample at the first photodetector voltage and at the second photodetector voltage. The data signals may be further generated based on the baseline sample. The method may include baseline sampling at a predetermined frequency. The method may include measuring a high-frequency baseline sample at a baseline frequency. The method may include measuring a baseline sample at a baseline frequency of from 0.0001 MHz to 15 MHz. The baseline sampling frequency may be greater than the modulation frequency. The baseline sampling = frequency may be less than the modulation frequency. The baseline sampling frequency may be equal to the modulation frequency. The generated data signals may be scaled. The data signals may be scaled on a single continuous scale and dividing the generated data signal by a photodetector gain at each photodetector voltage.

One or more parameters of particles in the sample may be determined from data signals generated from light detected at the first photodetector voltage. One or more parameters of particles in the sample may be determined from data signals generated from light detected at the second photodetector voltage. One or more parameters of particles in the sample may be determined from data signals generated from light detected at the first photodetector voltage and light detected at the second photodetector voltage.

Light may be detected in a plurality of photodetector channels. The detected light may be scattered light, such as forward-scattered light, side-scattered light or a combination thereof. The method may include irradiating the sample with a light source. The light source may include a laser, such as a plurality of lasers.

The present disclosure also includes a system for practicing the subject method, e.g., modulating a photodetector in a light detection system (such as in a flow cytometer). The system of the present disclosure may include a light source configured to irradiate a sample having a particle in a flow stream, a light detection system having a photodetector for detecting light from the particles in the sample, where the photodetector is configured to modulate between a first photodetector voltage and a second photodetector voltage and to generate data signals from the light detected from the particles at one or more of the first photodetector voltage and at the second photodetector voltage. The system may also include a processor having memory operably coupled to the processor where the memory includes instructions stored thereon, which when executed by the processor, cause the processor to generate data signals in response to determine one or more parameters of the particle from the generated data signals.

The voltage of the photodetector may be modulated between the first voltage and the second voltage at a frequency of from 0.005 MHz to 10 MHz. The voltage of the photodetector may be modulated between the first voltage and the second voltage at a frequency of from 0.1 MHz to 1 MHz. The photodetector may be configured to maintain the voltage for 1 µs or less per period, such as for 0.5 µs or less per period. The first photodetector voltage may be higher than the second photodetector voltage. The first photodetector voltage may be from 500 mV to 2000 mV, such as from 600 mV to 1800 mV. The second photodetector voltage may be from 0.001 mV to 500 mV, such as from 1 mV to 400 mV.

The light detection system may be configured to modulate the voltage of the photodetector between the first photodetector voltage and the second photodetector voltage with a square-form voltage change. The photodetector may be configured to generate data signals from the light detected at the first photodetector voltage. The photodetector may be configured to generate data signals from the light detected at the second photodetector voltage. The photodetector may be configured to generate data signals from the light detected at the first photodetector voltage and light detected at the second photodetector voltage. The photodetector may be configured to generate data signals from the light detected at the second photodetector voltage when the light detected at the first photodetector voltage exhibits detector saturation level greater than a saturation threshold. The photodetector may be configured to generate data signals only from the light detected at the second photodetector voltage when the light detected at the first photodetector voltage exhibits detector saturation level greater than a saturation threshold. The photodetector may be configured to detect light with the photodetector only at the second photodetector voltage when the light detected at the first photodetector voltage exhibits a detector saturation level greater than a saturation threshold.

The memory may include instructions which when executed by the process cause the processor to measure a baseline sample at the first photodetector voltage and at the second photodetector voltage. The memory may include instructions to generate the data signals based on the baseline sample. The memory may include instructions for measuring the baseline sample at a baseline sampling frequency. The memory may include instructions for measuring the baseline sample at a frequency of from 0.0001 MHz to 15 MHz. The memory may include instructions for measuring the baseline sample of the generated data signals at a frequency that is greater than the modulation frequency. The memory may include instructions for measuring the baseline sample of the generated data signals at a frequency that is less than the modulation frequency. The memory may include instructions for measuring the baseline sample of the generated data signals at a frequency that is equal to the modulation frequency. The memory may include instructions for scaling the generated data signals. The memory may include instructions for scaling the data signals on a single continuous scale and dividing the generated data signal by a photodetector gain at each photodetector voltage.

The memory may include instructions for determining one or more parameters of the particles in the sample from data signals generated from light detected at the first photodetector voltage. The memory may include instructions for determining one or more parameters of the particles in the sample from data signals generated from light detected at the second photodetector voltage. The memory may include instructions for determining one or more parameters of the particles in the sample from data signals generated from light detected at the first photodetector voltage and light detected at the second photodetector voltage.

The light detection system may include a photodetector that is configured to detect scattered light. The photodetector may be a side-scatter photodetector. The photodetector may be a front-scatter photodetector. The system may be a flow cytometer.

The present disclosure also relates to a non-transitory computer readable storage medium, such as to a computer implemented method described herein. The non-transitory computer readable storage medium may include one or more of the following algorithms; an algorithm for irradiating with a light source a sample comprising particles in a flow stream, an algorithm for detecting light from the particles in the sample with a light detection system comprising a photodetector, where the voltage of the photodetector is modulated between a first voltage and a second voltage at a modulation frequency, an algorithm for generating data signals from the light detected from the particles at one or more of the first photodetector voltage and at the second photodetector voltage and an algorithm for determining one or more parameters of the particle from the generated data signals.

The non-transitory computer readable storage medium may include an algorithm for modulating the voltage of the photodetector between the first voltage and the second voltage at a frequency of from 0.005 MHz to 10 MHz. The non-transitory computer readable storage medium may include an algorithm for modulating the voltage of the photodetector between the first voltage and the second voltage at a frequency of from 0.1 MHz to 1 MHz. The non-transitory computer readable storage medium may include an algorithm for maintaining the voltage of the photodetector for 1 µs or less per period, such as for 0.5 µs or less per period. The first photodetector voltage may be higher than the second photodetector voltage. The first photodetector voltage may be from 500 mV to 2000 mV, such as from 600 mV to 1800 mV. The second photodetector voltage may be from 0.001 mV to 500 mV, such as from 1 mV to 400 mV.

The non-transitory computer readable storage medium may include an algorithm for modulating the voltage of the photodetector between the first photodetector voltage and the second photodetector voltage with a square-form voltage change. The non-transitory computer readable storage medium may include an algorithm for generating data signals from the light detected at the first photodetector voltage. The non-transitory computer readable storage medium may include an algorithm for generating data signals from the light detected at the second photodetector voltage. The non-transitory computer readable storage medium may include an algorithm for generating data signals from the light detected at the first photodetector voltage and light detected at the second photodetector voltage. The non-transitory computer readable storage medium may include an algorithm for generating data signals from the light detected at the second photodetector voltage when the light detected at the first photodetector voltage exhibits a detector saturation level greater than a saturation threshold. The non-transitory computer readable storage medium may include an algorithm for generating data signals only from the light detected at the second photodetector voltage when the light detected at the first photodetector voltage exhibits a detector saturation level greater than a saturation threshold. The non-transitory computer readable storage medium may include an algorithm for detecting light with the photodetector only at the second photodetector voltage when the light detected at the first photodetector voltage exhibits a detector saturation level greater than a saturation threshold.

The non-transitory computer readable storage medium may include an algorithm for measuring the baseline sample of the generated data signals at each of the first photodetector voltage and at the second photodetector voltage. The non-transitory computer readable storage medium may include an algorithm for generating data signals based on the baseline sample The non-transitory computer readable storage medium may include an algorithm for measuring the baseline sample at a baseline sampling frequency. The non-transitory computer readable storage medium may include an algorithm for baseline sampling at a frequency of from 0.0001 MHz to 15 MHz. The non-transitory computer readable storage medium may include an algorithm for measuring the baseline sample of the generated data signals at a frequency greater than the modulation frequency. The non-transitory computer readable storage medium may include an algorithm for measuring the baseline sample of the generated data signals at a frequency less than the modulation frequency. The non-transitory computer readable storage medium may include an algorithm for measuring the baseline sample of the generated data signals at a frequency equal to the modulation frequency. The non-transitory computer readable storage medium may include an algorithm for scaling the generated data signals. The non-transitory computer readable storage medium may include an algorithm for scaling the data signals on a single continuous scale and dividing the generated data signal by a photodetector gain at each photodetector voltage.

The non-transitory computer readable storage medium may include an algorithm for determining one or more parameters of the particles in the sample from data signals generated from light detected at the first photodetector voltage. The non-transitory computer readable storage medium may include an algorithm for determining one or more parameters of the particles in the sample from data signals generated from light detected at the second photodetector voltage. The non-transitory computer readable storage medium may include an algorithm for determining one or more parameters of the particles in the sample from data signals generated from light detected at the first photodetector voltage and light detected at the second photodetector voltage.

### BRIEF DESCRIPTION OF THE FIGURES

The disclosure may be best understood from the following detailed description when read in conjunction with the accompanying drawings. Included in the drawings are the following figures:
**FIG. 1A** depicts a flow chart for determining one or more parameters of a particle of a sample in a flow stream based on light detected with a modulated photodetector according to the present disclosure. **FIG. 1B** depicts detecting light from a particle of a sample with a modulated photodetector according to the present disclosure.
**FIG. 2** presents a flow cytometric system according to the present disclosure.
**FIG. 3** depicts an image-enabled particle sorter according to the present disclosure.
**FIG. 4** depicts a functional block diagram of a particle analysis system according to the present disclosure.
**FIG. 5** depicts a depicts a functional block diagram for one example of a control system according to the present disclosure.
**FIG. 6A-6B** depict schematic drawings of a particle sorter system according to the present disclosure.
**FIG. 7** depicts aspects of a computer-controlled system according to the present disclosure.

### DETAILED DESCRIPTION

Aspects of the present disclosure include methods for modulating a photodetector in a light detection system (e.g., in a flow cytometer). The method according to the present disclosure includes irradiating with a light source a sample having particles in a flow stream, detecting light from the particles in the sample with a photodetector where the voltage of the photodetector is modulated between a first voltage and a second voltage at a modulation frequency, generating data signals from the light detected from the particles at one or more of the first photodetector voltage and at the second photodetector voltage and determining one or more parameters of the particle from the generated data signals. Systems and non-transitory computer-readable storage media configured to carry out the subject methods are also provided.

Where a range of values is provided, it is understood that each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

Certain ranges are presented herein with numerical values being preceded by the term "about." The term "about" is used herein to provide literal support for the exact number that it precedes, as well as a number that is near to or approximately the number that the term precedes. In determining whether a number is near to or approximately a specifically recited number, the near or approximating unrecited number may be a number which, in the context in which it is presented, provides the substantial equivalent of the specifically recited number.

Unless defined otherwise, all technical and scientific terms used herein have the same meaning as commonly understood by one of ordinary skill in the art to which this disclosure belongs. Although any methods and materials similar or equivalent to those described herein can also be used in the practice or testing of the present disclosure, representative illustrative methods and materials are now described.

It is noted that, as used herein and in the appended claims, the singular forms "a", "an", and "the" include plural referents unless the context clearly dictates otherwise. It is further noted that the claims may be drafted to exclude any optional element. As such, this statement is intended to serve as antecedent basis for use of such exclusive terminology as "solely," "only" and the like in connection with the recitation of claim elements, or use of a "negative" limitation.

### METHODS FOR MODULATING A PHOTODETECTOR IN A LIGHT DETECTION SYSTEM

The present disclosure includes a method for modulating a photodetector in a light detection system (e.g., in a flow cytometer). Modulating the photodetector may increase the sensitivity in the detection of particles of varying size and brightness of fluorophores used for fluorescence measurement. The subject method provides for expansion of the dynamic range of the photodetector. The term dynamic range is used herein in its conventional sense to refer to the response range of the photodetector, such as the difference between its noise floor (lower threshold) and saturation intensity (upper threshold). The subject method and system provides for an increase in dynamic range of the photodetector by 10% or more, such as by 25% or more, such as by 50% or more, such as by 75% or more, such as by 100% or more, such as by 150% or more, such as by 200% or more, such as by 250% or more and including where the dynamic range of the photodetector is increased by 300% or more. Modulating the photodetector as described herein may provide for expansion of the dynamic range of the photodetector by 0.5 decades or more, such as by 1 decade or more, such as by 1.5 decades or more, such as by 2 decades or more, such as by 2.5 decades or more, such as by 3 decades or more, such as by 3.5 decades or more, such as by 4 decades or more, such as by 4.5 decades or more, such as by 5 decades or more, such as by 7.5 decades or more and including by 10 decades or more. The total dynamic range of the photodetector in the system may range from 4 to 12 decades, such as from 6 to 11 decades, such as from 7 to 10 decades and including from 8 to 9 decades. The subject method and system may reduce detector saturation when detecting light from an irradiated sample. The subject method and system may reduce the photodetector noise in data signals from light detected from an irradiated sample.

Modulating the photodetector as described in the present disclosure may provide for an increase in the detectable particle (e.g., cell) sizes by 10% or more, such as by 25% or more, such as by 50% or more, such as by 75% or more, such as by 1.5-fold or more, such as by 2-fold or more, such as by 5-fold or more and including by 10-fold or more. Simultaneous detection of very dim fluorophores and very bright fluorophores (e.g., in a sample having different types of particles and fluorescent markers) may be provided, such as where the signal intensity of the detected fluorescence differs between the types of fluorophores by 50% or more, such as by 75% or more, such as by 100% or more, such as by 1.5-fold or more, such as by 2-fold or more, such as by 3-fold or more, such as by 4-fold or more, such as by 5-fold or more, such as by 6-fold or more, such as by 7-fold or more, such as by 8-fold or more, such as by 9-fold or more, such as by 10-fold or more, such as by 25-fold or more, such as by 50-fold or more and including by 100-fold or more.

In the present disclosure, the subject method may provide for an optimized photodetector system performance, such as increased signal-to-noise ratio of the light detection system. For example, the signal-to-noise ratio of the light detection system may be increased by 5% or more, such as by 10% or more, such as by 25% or more, such as by 50% or more, such as by 75% or more, such as by 90% or more and including by 99% or more. The subject methods increase the signal-to-noise ratio by 2-fold or more, such as by 3-fold or more, such as by 4-fold or more, such as by 5- fold or more and including by 10-fold or more. The subject method may increase consistency of output from the photodetectors of the light detection system by 5% or more, such as by 10% or more, such as by 25% or more, such as by 50% or more, such as by 75% or more, such as by 90% or more and including by 99% or more.

In practicing the subject method, a sample having particles (e.g., in a flow stream of a flow cytometer) is irradiated with light from a light source. The light source may be a broadband light source, emitting light having a broad range of wavelengths, such as for example, spanning 50 nm or more, such as 100 nm or more, such as 150 nm or more, such as 200 nm or more, such as 250 nm or more, such as 300 nm or more, such as 350 nm or more, such as 400 nm or more and including spanning 500 nm or more. For example, one suitable broadband light source emits light having wavelengths from 200 nm to 1500 nm. Another example of a suitable broadband light source includes a light source that emits light having wavelengths from 400 nm to 1000 nm. Where the method includes irradiating with a broadband light source, broadband light source protocols of interest may include, but are not limited to, a halogen lamp, deuterium arc lamp, xenon arc lamp, stabilized fiber-coupled broadband light source, a broadband LED with continuous spectrum, superluminescent emitting diode, semiconductor light emitting diode, wide spectrum LED white light source, an multi-LED integrated white light source, among other broadband light sources or any combination thereof.

The method may include irradiating with a narrow band light source emitting a particular wavelength or a narrow range of wavelengths, such as for example with a light source which emits light in a narrow range of wavelengths like a range of 50 nm or less, such as 40 nm or less, such as 30 nm or less, such as 25 nm or less, such as 20 nm or less, such as 15 nm or less, such as 10 nm or less, such as 5 nm or less, such as 2 nm or less and including light sources which emit a specific wavelength of light (i.e., monochromatic light). Where methods include irradiating with a narrow band light source, narrow band light source protocols of interest may include, but are not limited to, a narrow wavelength LED, laser diode or a broadband light source coupled to one or more optical bandpass filters, diffraction gratings, monochromators or any combination thereof.

In the present disclosure, the method may include irradiating the sample with one or more lasers. As discussed above, the type and number of lasers will vary depending on the sample as well as desired light collected and may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. The method may include irradiating the flow stream with a dye laser, such as a stilbene, coumarin or rhodamine laser. The method may include irradiating the flow stream with a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. The method may include irradiating the flow stream with a solid-state laser, such as a ruby laser, an Nd:YAG laser, NdCrYAG laser, Er:YAG laser, Nd:YLF laser, Nd:YVO₄ laser, Nd:yCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The sample may be irradiated with one or more of the above-mentioned light sources, such as 2 or more light sources, such as 3 or more light sources, such as 4 or more light sources, such as 5 or more light sources and including 10 or more light sources. The light source may include any combination of types of light sources. For example, the method may include irradiating the sample in the flow stream with an array of lasers, such as an array having one or more gas lasers, one or more dye lasers and one or more solid-state lasers.

The sample may be irradiated with wavelengths ranging from 200 nm to 1500 nm, such as from 250 nm to 1250 nm, such as from 300 nm to 1000 nm, such as from 350 nm to 900 nm and including from 400 nm to 800 nm. For example, where the light source is a broadband light source, the sample may be irradiated with wavelengths from 200 nm to 900 nm. Where the light source includes a plurality of narrow band light sources, the sample may be irradiated with specific wavelengths in the range from 200 nm to 900 nm. For example, the light source may be plurality of narrow band LEDs (1 nm - 25 nm) each independently emitting light having a range of wavelengths between 200 nm to 900 nm. The narrow band light source may include one or more lasers (such as a laser array) and the sample is irradiated with specific wavelengths ranging from 200 nm to 700 nm, such as with a laser array having gas lasers, excimer lasers, dye lasers, metal vapor lasers and solid-state laser as described above.

Where more than one light source is employed, the sample may be irradiated with the light sources simultaneously or sequentially, or a combination thereof. For example, the sample may be simultaneously irradiated with each of the light sources. The flow stream may be sequentially irradiated with each of the light sources. Where more than one light source is employed to irradiate the sample sequentially, the time each light source irradiates the sample may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the sample with the light source (e.g. laser) for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. Where the sample is sequentially irradiated with two or more light sources, the duration sample is irradiated by each light source may be the same or different.

The time period between irradiation by each light source may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In the present disclosure, the time period between irradiation by each light source may be 10 microseconds. Where the sample is sequentially irradiated by more than two (i.e., 3 or more) light sources, the delay between irradiation by each light source may be the same or different.

The sample may be irradiated continuously or in discrete intervals. The method may include irradiating the sample in the sample with the light source continuously. The sample may be irradiated with the light source in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the light source, the sample may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

In the present disclosure, the method may include irradiating the sample with two or more beams of frequency shifted light. As described above, a light beam generator component may be employed having a laser and an acousto-optic device for frequency shifting the laser light. The method may include irradiating the acousto-optic device with the laser. Depending on the desired wavelengths of light produced in the output laser beam (e.g., for use in irradiating a sample in a flow stream), the laser may have a specific wavelength that varies from 200 nm to 1500 nm, such as from 250 nm to 1250 nm, such as from 300 nm to 1000 nm, such as from 350 nm to 900 nm and including from 400 nm to 800 nm. The acousto-optic device may be irradiated with one or more lasers, such as 2 or more lasers, such as 3 or more lasers, such as 4 or more lasers, such as 5 or more lasers and including 10 or more lasers. The lasers may include any combination of types of lasers. For example, the method may include irradiating the acousto-optic device with an array of lasers, such as an array having one or more gas lasers, one or more dye lasers and one or more solid-state lasers.

Where more than one laser is employed, the acousto-optic device may be irradiated with the lasers simultaneously or sequentially, or a combination thereof. For example, the acousto-optic device may be simultaneously irradiated with each of the lasers. The acousto-optic device may be sequentially irradiated with each of the lasers. Where more than one laser is employed to irradiate the acousto-optic device sequentially, the time each laser irradiates the acousto-optic device may independently be 0.001 microseconds or more, such as 0.01 microseconds or more, such as 0.1 microseconds or more, such as 1 microsecond or more, such as 5 microseconds or more, such as 10 microseconds or more, such as 30 microseconds or more and including 60 microseconds or more. For example, methods may include irradiating the acousto-optic device with the laser for a duration which ranges from 0.001 microseconds to 100 microseconds, such as from 0.01 microseconds to 75 microseconds, such as from 0.1 microseconds to 50 microseconds, such as from 1 microsecond to 25 microseconds and including from 5 microseconds to 10 microseconds. Where the acousto-optic device is sequentially irradiated with two or more lasers, the duration the acousto-optic device is irradiated by each laser may be the same or different.

The time period between irradiation by each laser may also vary, as desired, being separated independently by a delay of 0.001 microseconds or more, such as 0.01 microseconds or more, such as 0.1 microseconds or more, such as 1 microsecond or more, such as 5 microseconds or more, such as by 10 microseconds or more, such as by 15 microseconds or more, such as by 30 microseconds or more and including by 60 microseconds or more. For example, the time period between irradiation by each light source may range from 0.001 microseconds to 60 microseconds, such as from 0.01 microseconds to 50 microseconds, such as from 0.1 microseconds to 35 microseconds, such as from 1 microsecond to 25 microseconds and including from 5 microseconds to 10 microseconds. In the present disclosure, the time period between irradiation by each laser is 10 microseconds. Where the acousto-optic device is sequentially irradiated by more than two (i.e., 3 or more) lasers, the delay between irradiation by each laser may be the same or different.

The acousto-optic device may be irradiated continuously or in discrete intervals.The method may include irradiating the acousto-optic device with the laser continuously. The acousto-optic device may be irradiated with the laser in discrete intervals, such as irradiating every 0.001 millisecond, every 0.01 millisecond, every 0.1 millisecond, every 1 millisecond, every 10 milliseconds, every 100 milliseconds and including every 1000 milliseconds, or some other interval.

Depending on the laser, the acousto-optic device may be irradiated from a distance which varies such as 0.01 mm or more, such as 0.05 mm or more, such as 0.1 mm or more, such as 0.5 mm or more, such as 1 mm or more, such as 2.5 mm or more, such as 5 mm or more, such as 10 mm or more, such as 15 mm or more, such as 25 mm or more and including 50 mm or more. Also, the angle or irradiation may also vary, ranging from 10° to 90°, such as from 15° to 85°, such as from 20° to 80°, such as from 25° to 75° and including from 30° to 60°, for example at a 90° angle.

The method may include applying radiofrequency drive signals to the acousto-optic device to generate angularly deflected laser beams. Two or more radiofrequency drive signals may be applied to the acousto-optic device to generate an output laser beam with the desired number of angularly deflected laser beams, such as 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including 100 or more radiofrequency drive signals.

The angularly deflected laser beams produced by the radiofrequency drive signals each have an intensity based on the amplitude of the applied radiofrequency drive signal. The method may include applying radiofrequency drive signals having amplitudes sufficient to produce angularly deflected laser beams with a desired intensity. Each applied radiofrequency drive signal independently may have an amplitude from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal may independently have an amplitude from about 0.001 V to 100 V, such as from about 0.001 V to 200 V, such as from 0.001 V to 300 V, such as from 0.001 V to 400 V and including from 0.001 V to 500 V. Each applied radiofrequency drive signal may have a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz. Each applied radiofrequency drive signal may have a frequency of from about 0.001 MHz to about 100 MHz, such as from 0.001 MHz to 200 MHz, such as from 0.001 MHz to 300 MHz, such as from 0.001 MHz to 400 MHz, such as from 0.001 MHz to 500 MHz.

The angularly deflected laser beams in the output laser beam may be spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. The angularly deflected laser beams may overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

The flow stream may be irradiated with a plurality of beams of frequency-shifted light and particles in the flow stream are imaged such as described in Diebold, et al. Nature Photonics Vol. 7(10); 806-810 (2013), as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

In practicing the subject methods, light from each particle is detected by a light detection system. The light detection system may include one or more photodetectors, such as 2 or more, such as 3 or more, such as 4 or more, such as 5 or more, such as 6 or more, such as 7 or more, such as 8 or more, such as 9 or more and including 10 or more photodetectors. Photodetectors for practicing the subject methods may be any convenient light detecting protocol, including but not limited to photosensors or photodetectors, such as active-pixel sensors (APSs), quadrant photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes, phototransistors, quantum dot photoconductors or photodiodes and combinations thereof, among other photodetectors. In the present disclosure, the photodetector may be a photomultiplier tube, such as a photomultiplier tube having an active detecting surface area of each region that ranges from 0.01 cm² to 10 cm², such as from 0.05 cm² to 9 cm², such as from, such as from 0.1 cm² to 8 cm², such as from 0.5 cm² to 7 cm² and including from 1 cm² to 5 cm². Light from the irradiated sample is detected in two or more photodetector channels, such as 3 or more, such as 4 or more, such as 5 or more, such as 6 or more, such as 7 or more, such as 8 or more, such as 9 or more, such as 10 or more, such as 12 or more, such as 16 or more, such as 24 or more, such as 24 or more, such as 32 or more, such as 64 or more, such as 128 or more, such as 256 or more and including 512 or more photodetector channels.

Light may be measured by the photodetector at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light from particles in the flow stream at 400 or more different wavelengths. Light may be measured continuously or in discrete intervals. Detectors of interest may be configured to take measurements of the light continuously. Detectors of interest may be configured to take measurements in discrete intervals, such as measuring light every 0.001 millisecond, every 0.01 millisecond, every 0.1 millisecond, every 1 millisecond, every 10 milliseconds, every 100 milliseconds and including every 1000 milliseconds, or some other interval.

In the present disclosure, light detected from the sample is scattered light. The term "scattered light" is used herein in its conventional sense to refer to the propagation of light energy from particles in the sample (e.g., flowing in a flow stream) that are deflected from the incident beam path, such as by reflection, refraction or deflection of the beam of light. Scattered light detected from the particles in the flow stream may be forward scattered light (FSC). Scattered light detected from the particles in the flow stream may be side scattered light (SSC). Scattered light detected from the particles in the flow stream may be back-scattered light (BSC).

Light detected from each particle in the sample may be transmitted light, such as light detected with a brightfield light detector. Light detected from each particle in the sample may be emitted light, such as particle luminescence (i.e., fluorescence or phosphorescence). Each particle may include one or more fluorophores which emit fluorescence in response to irradiation by the two or more light sources. For example, each particle may include 2 or more fluorophores, such as 3 or more, such as 4 or more, such as 5 or more, such as 6 or more, such as 7 or more, such as 8 or more, such as 9 or more and including 10 or more fluorophores. Each particle may include a first fluorophore which emits fluorescence in response to irradiation by a first laser and a second fluorophore which emits fluorescence in response to irradiation by a second laser. Fluorophores of interest may include but are not limited to dyes suitable for use in analytical applications (e.g., flow cytometry, imaging, etc.) , such as an acridine dye, anthraquinone dyes, arylmethane dyes, diarylmethane dyes (e.g., diphenyl methane dyes), chlorophyll containing dyes, triarylmethane dyes (e.g., triphenylmethane dyes), azo dyes, diazonium dyes, nitro dyes, nitroso dyes, phthalocyanine dyes, cyanine dyes, asymmetric cyanine dyes, quinon-imine dyes, azine dyes, eurhodin dyes, safranin dyes, indamins, indophenol dyes, fluorine dyes, oxazine dye, oxazone dyes, thiazine dyes, thiazole dyes, xanthene dyes, fluorene dyes, pyronin dyes, fluorine dyes, rhodamine dyes, phenanthridine dyes, as well as dyes combining two or more of the aforementioned dyes (e.g., in tandem), polymeric dyes having one or more monomeric dye units and mixtures of two or more of the aforementioned dyes thereof. A large number of dyes are commercially available from a variety of sources, such as, for example, Molecular Probes (Eugene, OR), Dyomics GmbH (Jena, Germany), Sigma-Aldrich (St. Louis, MO), Sirigen, Inc. (Santa Barbara, CA) and Exciton (Dayton, OH). For example, the fluorophore may include 4-acetamido-4'-isothiocyanatostilbene-2,2'disulfonic acid; acridine and derivatives such as acridine, acridine orange, acridine yellow, acridine red, and acridine isothiocyanate; allophycocyanin, phycoerythrin, peridinin-chlorophyll protein, 5-(2'-aminoethyl)aminonaphthalene-1-sulfonic acid (EDANS); 4-amino-N-[3-vinylsulfonyl)phenyl]naphthalimide-3,5 disulfonate (Lucifer Yellow VS); N-(4-anilino-1-naphthyl)maleimide; anthranilamide; Brilliant Yellow; coumarin and derivatives such as coumarin, 7-amino-4-methylcoumarin (AMC, Coumarin 120), 7-amino-4-trifluoromethylcouluarin (Coumaran 151); cyanine and derivatives such as cyanosine, Cy3, Cy3.5, Cy5, Cy5.5, and Cy7; 4',6-diaminidino-2-phenylindole (DAPI); 5', 5"-dibromopyrogallol-sulfonephthalein (Bromopyrogallol Red); 7-diethylamino-3-(4'-isothiocyanatophenyl)-4-methylcoumarin; diethylaminocoumarin; diethylenetriamine pentaacetate; 4,4'-diisothiocyanatodihydro-stilbene-2,2'-disulfonic acid; 4,4'-diisothiocyanatostilbene-2,2'-disulfonic acid; 5-[dimethylamino]naphthalene-1-sulfonyl chloride (DNS, dansyl chloride); 4-(4'-dimethylaminophenylazo)benzoic acid (DABCYL); 4-dimethylaminophenylazophenyl-4'-isothiocyanate (DABITC); eosin and derivatives such as eosin and eosin isothiocyanate; erythrosin and derivatives such as erythrosin B and erythrosin isothiocyanate; ethidium; fluorescein and derivatives such as 5-carboxyfluorescein (FAM), 5-(4,6-dichlorotriazin-2-yl)aminofluorescein (DTAF), 2'7'-dimethoxy-4'5'-dichloro-6-carboxyfluorescein (JOE), fluorescein isothiocyanate (FITC), fluorescein chlorotriazinyl, naphthofluorescein, and QFITC (XRITC); fluorescamine; IR144; IR1446; Green Fluorescent Protein (GFP); Reef Coral Fluorescent Protein (RCFP); Lissamine^{™}; Lissamine rhodamine, Lucifer yellow; Malachite Green isothiocyanate; 4-methylumbelliferone; ortho cresolphthalein; nitrotyrosine; pararosaniline; Nile Red; Oregon Green; Phenol Red; B-phycoerythrin; o-phthaldialdehyde; pyrene and derivatives such as pyrene, pyrene butyrate and succinimidyl 1-pyrene butyrate; Reactive Red 4 (Cibacron^{™} Brilliant Red 3B-A); rhodamine and derivatives such as 6-carboxy-X-rhodamine (ROX), 6-carboxyrhodamine (R6G), 4,7-dichlororhodamine lissamine, rhodamine B sulfonyl chloride, rhodamine (Rhod), rhodamine B, rhodamine 123, rhodamine X isothiocyanate, sulforhodamine B, sulforhodamine 101, sulfonyl chloride derivative of sulforhodamine 101 (Texas Red), N,N,N',N'-tetramethyl-6-carboxyrhodamine (TAMRA), tetramethyl rhodamine, and tetramethyl rhodamine isothiocyanate (TRITC); riboflavin; rosolic acid and terbium chelate derivatives; xanthene; dye-conjugated polymers (i.e., polymer-attached dyes) such as fluorescein isothiocyanate-dextran as well as dyes combining two or more dyes (e.g., in tandem), polymeric dyes having one or more monomeric dye units and mixtures of two or more of the aforementioned dyes or combinations thereof.

The fluorophore (i.e., dye) may be a fluorescent polymeric dye. Fluorescent polymeric dyes that find use in the subject methods and systems are varied. The polymeric dye may include a conjugated polymer. Conjugated polymers (CPs) are characterized by a delocalized electronic structure which includes a backbone of alternating unsaturated bonds (e.g., double and/or triple bonds) and saturated (e.g., single bonds) bonds, where π-electrons can move from one bond to the other. As such, the conjugated backbone may impart an extended linear structure on the polymeric dye, with limited bond angles between repeat units of the polymer. For example, proteins and nucleic acids, although also polymeric, in some cases do not form extended-rod structures but rather fold into higher-order three-dimensional shapes. In addition, CPs may form "rigid-rod" polymer backbones and experience a limited twist (e.g., torsion) angle between monomer repeat units along the polymer backbone chain.The polymeric dye may include a CP that has a rigid rod structure. As summarized above, the structural characteristics of the polymeric dyes can have an effect on the fluorescence properties of the molecules.

Any convenient polymeric dye may be utilized in the subject methods and systems. A polymeric dye may be a multichromophore that has a structure capable of harvesting light to amplify the fluorescent output of a fluorophore. The polymeric dye may be capable of harvesting light and efficiently converting it to emitted light at a longer wavelength. In some cases, the polymeric dye has a light-harvesting multichromophore system that can efficiently transfer energy to nearby luminescent species (e.g., a "signaling chromophore"). Mechanisms for energy transfer include, for example, resonant energy transfer (e.g., Forster (or fluorescence) resonance energy transfer, FRET), quantum charge exchange (Dexter energy transfer) and the like. These energy transfer mechanisms may be relatively short range; that is, close proximity of the light harvesting multichromophore system to the signaling chromophore provides for efficient energy transfer. Under conditions for efficient energy transfer, amplification of the emission from the signaling chromophore occurs when the number of individual chromophores in the light harvesting multichromophore system is large; that is, the emission from the signaling chromophore is more intense when the incident light (the "excitation light") is at a wavelength which is absorbed by the light harvesting multichromophore system than when the signaling chromophore is directly excited by the pump light.

The multichromophore may be a conjugated polymer. Conjugated polymers (CPs) are characterized by a delocalized electronic structure and can be used as highly responsive optical reporters for chemical and biological targets. Because the effective conjugation length is substantially shorter than the length of the polymer chain, the backbone contains a large number of conjugated segments in close proximity. Thus, conjugated polymers are efficient for light harvesting and enable optical amplification via energy transfer.

The polymer may be used as a direct fluorescent reporter, for example fluorescent polymers having high extinction coefficients, high brightness, etc. The polymer may be used as a strong chromophore where the color or optical density is used as an indicator.

Polymeric dyes of interest include, but are not limited to, those dyes described by Gaylord et al. in US Publication Nos. 20040142344, 20080293164, 20080064042, 20100136702, 20110256549, 20120028828, 20120252986, 20130190193 and 20160025735 ; and Gaylord et al., J. Am. Chem. Soc., 2001, 123 (26), pp 6417-6418; Feng et al., Chem. Soc. Rev., 2010,39, 2411-2419; and Traina et al., J. Am. Chem. Soc., 2011, 133 (32), pp 12600-12607.

The method may include modulating the voltage of the photodetector between at least a first voltage and a second voltage. The photodetector may be modulated between 3 or more voltages, such as between 4 or more, 5 or more, 6 or more, 7 or more and including 8 or more different voltages. The photodetector may modulate (e.g., oscillate) between a first photodetector voltage and a second photodetector voltage. The voltage of the photodetector may be modulated (e.g., oscillates) between the first photodetector voltage and the second photodetector voltage at a frequency of from 0.0001 MHz to 15 MHz, such as from 0.0005 MHz to 14 MHz, such as from 0.001 MHz to 13 MHz, such as from 0.005 MHz to 12 MHz, such as from 0.01 MHz to 11 MHz, such as from 0.05 MHz to 10 MHz, such as from 0.1 MHz to 9 MHz, such as from 0.5 MHz to 8 MHz, such as from 1 MHz to 7 MHz, such as from 1 MHz to 6 MHz and including from 1 MHz to 5 MHz. The voltage of the photodetector may oscillate between the first photodetector voltage and the second photodetector voltage at a frequency of from 0.1 MHz to 1 MHz. The photodetector voltage may be modulated (e.g., oscillated) at a frequency of from 0.0001 MHz to 5 MHz, such as from 0.0005 MHz to 6 MHz, such as from 0.001 MHz to 7 MHz, such as from 0.005 MHz to 8 MHz, such as from 0.01 MHz to 9 MHz, such as from 0.05 MHz to 10 MHz, such as from 0.1 MHz to 11 MHz, such as from 0.5 MHz to 12 MHz, such as from 1 MHz to 13 MHz, such as from 1 MHz to 14 MHz and including from 1 MHz to 15 MHz. The photodetector voltage may be modulated at a frequency of from 0.0001 MHz to 1 MHz, such as from 0.0001 MHz to 2 MHz, such as from 0.0001 MHz to 3 MHz, such as from 0.0001 MHz to 4 MHz, such as from 0.0001 MHz to 5 MHz, such as from 0.0001 MHz to 6 MHz, such as from 0.0001 MHz to 7 MHz, such as from 0.0001 MHz to 8 MHz, such as from 0.0001 MHz to 9 MHz, such as from 0.0001 MHz to 10 MHz, such as from 0.0001 MHz to 11 MHz, such as from 0.0001 MHz to 12 MHz, such as from 0.0001 MHz to 13 MHz, such as from 0.0001 MHz to 14 MHz and including from 0.0001 MHz to 15 MHz.

The voltage of the photodetector may be maintained at the voltage for 25 µs or less per period, such as 20 µs or less per period, such as 15 µs or less per period, such as 10 µs or less per period, such as 9 µs or less per period, such as 8 µs or less per period, such as 7 µs or less per period, such as 6 µs or less per period, such as 5 µs or less per period, such as 4 µs or less per period, such as 3 µs or less per period, such as 2 µs or less per period, such as 1 µs or less per period, such as 0.9 µs or less per period, such 0.8 µs or less per period, such as 0.7 µs or less per period, such as 0.6 µs or less per period, such as 0.5 µs or less per period, such as 0.4 µs or less per period, such as 0.3 µs or less per period, such as 0.2 µs or less per period, such as 0.1 µs or less per period and including for 0.05 µs or less per period. The voltage of the photodetector may be maintained at the first photodetector voltage during each modulation cycle. The term "modulation cycle" is referred to herein as each cycle between the first photodetector voltage and second photodetector voltage. The voltage of the photodetector may be maintained at the first photodetector voltage for 25 µs or less per period, such as 20 µs or less per period, such as 15 µs or less per period, such as 10 µs or less per period, such as 9 µs or less per period, such as 8 µs or less per period, such as 7 µs or less per period, such as 6 µs or less per period, such as 5 µs or less per period, such as 4 µs or less per period, such as 3 µs or less per period, such as 2 µs or less per period, such as 1 µs or less per period, such as 0.9 µs or less per period, such 0.8 µs or less per period, such as 0.7 µs or less per period, such as 0.6 µs or less per period, such as 0.5 µs or less per period, such as 0.4 µs or less per period, such as 0.3 µs or less per period, such as 0.2 µs or less per period, such as 0.1 µs or less per

period and including for 0.05 µs or less per period. The voltage of the photodetector may be maintained at the second photodetector voltage for 25 µs or less per period, such as 20 µs or less per period, such as 15 µs or less per period, such as 10 µs or less per period, such as 9 µs or less per period, such as 8 µs or less per period, such as 7 µs or less per period, such as 6 µs or less per period, such as 5 µs or less per period, such as 4 µs or less per period, such as 3 µs or less per period, such as 2 µs or less per period, such as 1 µs or less per period, such as 0.9 µs or less per period, such 0.8 µs or less per period, such as 0.7 µs or less per period, such as 0.6 µs or less per period, such as 0.5 µs or less per period, such as 0.4 µs or less per period, such as 0.3 µs or less per period, such as 0.2 µs or less per period, such as 0.1 µs or less per period and including for 0.05 µs or less per period. The voltage of the photodetector may be maintained at the first photodetector voltage for the same duration as at the second photodetector voltage. The voltage of the photodetector may be maintained at the first photodetector voltage for a different duration than at the second photodetector voltage. Where the voltage of the photodetector is maintained at the first photodetector voltage for a different duration than at the second photodetector voltage, the voltage may be maintained at the different voltage for 1 or more modulation cycles, such as 2 or more, such as 3 or more, such as 4 or more, such as 5 or more, such as 10 or more, such as 25 or more, such as 50 or more, such as 100 or more, such as 250 or more, such as 500 or more and including 100 or more modulation cycles.

Depending on the type of photodetector (e.g., PMT, photodiode, etc.) the first photodetector voltage may be from 250 mV to 2500 mV, such as from 300 mV to 2400 mV, such as from 400 mV to 2300 mV, such as from 500 mV to 2200 mV, such as from 500 mV to 2100 mV, such as from 500 mV to 2000 mV, such as from 500 mV to 1900 mV, such as from 500 mV to 1800 mV, such as from 500 mV to 1700 mV, such as from 500 mV to 1600 mV, such as from 500 mV to 1500 mV, such as from 500 mV to 1400 mV, such as from 500 mV to 1300 mV, such as from 500 mV to 1200 mV, such as from 500 mV to 1100 mV and including from 500 mV to 1000 mV. The second photodetector voltage may be from 0.0001 mV to 1000 mV, such as from 0.0005 mV to 900 mV, such as from 0.001 mV to 800 mV, such as from 0.005 mV to 700 mV, such as from 0.01 mV to 600 mV, such as from 0.05 mV to 500 mV, such as from 0.1 mV to 500 mV, such as from 0.5 mV to 500 mV and including from 1 mV to 500 mV. The second photodetector voltage may be 50 mV or less, such as 40 mV or less, such as 30 mV or less, such as 20 mV or less, such as 10 mV or less and including 5 mV or less.

The voltage of the photodetector may be modulated between the first photodetector voltage and the second photodetector voltage by any convenient waveform change, such as where the voltage is modulated with a sine-wave type voltage change. The voltage of the photodetector may be modulated between the first photodetector voltage and the second photodetector voltage with a square-form voltage change. Each modulation cycle may exhibit a symmetrical voltage change (e.g., all square-form voltage changes). One or more modulation cycles may exhibit a different type of voltage change waveform such as where the modulation cycles exhibit a square-form voltage change and one or more modulation cycles exhibit a sine-wave type voltage change. The method may include a change in voltage change shape at predetermined intervals, such as after every 2 or more modulation cycles, such as 3 or more, such as 4 or more, such as 5 or more, such as 10 or more, such as 25 or more, such as 50 or more, such as 100 or more and including every 500 or more modulation cycles.

Data signals may be generated at one or more of the photodetector voltages from the detected light. 2 or more data signals may be generated at each of the photodetector voltages during each modulation cycle, such as 3 or more, such as 4 or more, such as 5 or more, such as 10 or more, such as 25 or more, such as 50 or more and including generating 100 or more data signals at each of the photodetector voltage during each modulation cycle. Light may be detected at the photodetector voltage and the data signals are averaged. Data signals may be generated at the first photodetector voltage during each modulation cycle. Data signals may be generated at the second photodetector voltage during each modulation cycle. Data signals may be generated at the first photodetector voltage and at the second photodetector voltage during each modulation cycle.

Data signals may only be generated at the first photodetector voltage during each modulation cycle, such as where 2 or more data signals are generated at only the first photodetector voltage during each modulation cycle, such as 3 or more, such as 4 or more, such as 5 or more and including generating 10 or more data signals at the first photodetector voltage during each modulation cycle. Data signals may only be generated at the second photodetector voltage during each modulation cycle, such as where 2 or more data signals are generated at only the first photodetector voltage during each modulation cycle, such as 3 or more, such as 4 or more, such as 5 or more and including generating 10 or more data signals at the first photodetector voltage during each modulation cycle.

The method may include generating data signals at the second photodetector voltage when the light detected at the first photodetector voltage exceeds a saturation threshold for the photodetector, such as where the light detected exceeds the saturation threshold by 5% or more, such as by 10% or more, such as by 15% or more, such as by 25% or more, such as by 50% or more and including where the data signals at the first photodetector voltage exceed the saturation threshold for the photodetector by 75% or more. Where the light detected at the first photodetector voltage exhibits a detector saturation level greater than a saturation threshold, the method may include generating data signals only from the light detected at the second photodetector voltage. Where the light detected at the first photodetector voltage exceeds a saturation threshold, an alert may be generated to indicate that the saturation has been exceeded or is approaching a level where the data signals are unreliable or inaccurate. The method may also include switching the photodetector voltage to the second photodetector voltage in response to the alert.

The method may include generating data signals at the first photodetector voltage when the generated data signals at the second photodetector voltage exceed a detected noise threshold, such as where the signal-to-noise ratio falls below a predetermined threshold. The noise of the photodetector at the second photodetector voltage may be sufficient to obscure or diminish the reliability of the generated data signals at the second photodetector voltage. The method may include generating data signals at the first photodetector voltage when the generated data signals at the second photodetector voltage fall below the noise threshold for the photodetector by 5% or more, such as by 10% or more, such as by 15% or more, such as by 25% or more, such as by 50% or more and including where the data signals at the second photodetector voltage fall below the noise threshold for the photodetector by 75% or more. Where the data signals generated at the second photodetector voltage exhibit too much noise (such as where the signal-to-noise ratio falls below the threshold), the method may include generating data signals only from the light detected at the first photodetector voltage. Where the data signals generated at the second photodetector voltage fall below a noise threshold, an alert may be generated to indicate that the signal-to-noise ratio of the data signals generated at the second photodetector voltage are too low or is approaching a level where the data signals are unreliable or inaccurate. The method may also include switching the photodetector voltage to the first photodetector voltage in response to the alert.

The method may include measuring a baseline sample at the first photodetector voltage and at the second photodetector voltage. The data signals may be further generated based on the baseline sample. The baseline noise may be calculated at each photodetector voltage during each modulation cycle. The baseline noise may be calibrated at each photodetector voltage. The baseline sample may be measured at each photodetector voltage at a baseline sampling frequency. The method may include measuring the baseline sample at a frequency that is greater than the modulation frequency. The method may include measuring the baseline sample at a frequency that is less than the modulation frequency. The method may include measuring the baseline sample at a frequency that is equal to the modulation frequency. The method may include measuring a baseline sample at a baseline sampling frequency, such as at a frequency of 0.0001 MHz to 15 MHz, such as from 0.0005 MHz to 14 MHz, such as from 0.001 MHz to 13 MHz, such as from 0.005 MHz to 12 MHz, such as from 0.01 MHz to 11 MHz, such as from 0.05 MHz to 10 MHz, such as from 0.1 MHz to 9 MHz, such as from 0.5 MHz to 8 MHz, such as from 1 MHz to 7 MHz, such as from 1 MHz to 6 MHz and including from 1 MHz to 5 MHz.

The baseline may be interpreted at the first photodetector voltage and at the second photodetector voltage (i.e., dual-mode operation) by a fixed time-dependent analysis. The baseline may be interpreted for at the first photodetector voltage and at the second photodetector voltage by a dynamic frequency domain derivation. The generated data signals may be scaled. The data signals may be scaled on a continuous scale. The data signals may be scaled on a single continuous scale and divided by the generated data signals at one or more of the first photodetector voltage and the second photodetector voltage by the gain at which the detector settings that were being used for modulation. The first photodetector voltage and the second photodetector voltage may be scaled as two separate parameters.

One or more parameters of particles in the sample may be determined from data signals generated from light detected at the first photodetector voltage. One or more parameters of particles in the sample may be determined from data signals generated from light detected at the second photodetector voltage. One or more parameters of particles in the sample are determined from data signals generated from light detected at the first photodetector voltage and light detected at the second photodetector voltage. In the present disclosure, the parameters of the particle include parameters as summarized in Table 1, such as for use in generating a gating strategy.

**Table 1**

| | Particle parameters |
|---|---|
| 1 | FSC-A :: FSC-A |
| 2 | FSC-H :: FSC-H |
| 3 | FSC-T :: FSC-T |
| 4 | FSC-W :: FSC-W |
| 5 | SSC (Imaging)-A :: SSC (Imaging)-A |
| 6 | SSC (Imaging)-H :: SSC (Imaging)-H |
| 7 | SSC (Imaging)-T :: SSC (Imaging)-T |
| 8 | SSC (Imaging)-W :: SSC (Imaging)-W |
| 9 | SSC (Violet)-A :: SSC (Violet)-A |
| 10 | SSC (Violet)-H :: SSC (Violet)-H |
| 11 | SSC (Violet)-T :: SSC (Violet)-T |
| 12 | SSC (Violet)-W :: SSC (Violet)-W |
| 13 | Center of Mass (X) (FSC) |
| 14 | Center of Mass (X) (LightLoss (Imaging) |
| 15 | Center of Mass (X) (SSC (Imaging)) |
| 16 | Center of Mass (Y) (FSC) |
| 17 | Center of Mass (Y) (LightLoss (Imaging) |
| 18 | Center of Mass (Y) (SSC (Imaging)) |
| 19 | Delta CoM (LightLoss (Imaging) FSC) |
| 20 | Delta CoM (SSC (Imaging)_FSC) |
| 21 | Delta CoM (SSC (Imaging)_LightLoss (Imaging)) |
| 22 | Diffusivity (FSC) |
| 23 | Diffusivity (LightLoss (Imaging)) |
| 24 | Diffusivity (SSC (Imaging)) |
| 25 | Eccentricity (FSC) |
| 26 | Eccentricity (LightLoss (Imaging)) |
| 27 | Eccentricity (SSC (Imaging)) |
| 28 | LightLoss (Imaging)-A :: LightLoss (Imaging)-A |
| 29 | LightLoss (Imaging)-H :: LightLoss (Imaging)-H |
| 30 | LightLoss (Imaging)-T :: LightLoss (Imaging)-T |
| 31 | LightLoss (Imaging)-W :: LightLoss (Imaging)-W |
| 32 | LightLoss (Violet)-A :: LightLoss (Violet)-A |
| 33 | LightLoss (Violet)-H :: LightLoss (Violet)-H |
| 34 | LightLoss (Violet)-T :: LightLoss (Violet)-T |
| 35 | LightLoss (Violet)-W :: LightLoss (Violet)-W |
| 36 | Long Axis Moment (FSC) |
| 37 | Long Axis Moment (LightLoss (Imaging)) |
| 38 | Long Axis Moment (SSC (Imaging)) |
| 39 | Max Intensity (FSC) |
| 40 | Max Intensity (LightLoss (Imaging)) |
| 41 | Max Intensity (SSC (Imaging)) |
| 42 | Radial Moment (FSC) |
| 43 | Radial Moment (LightLoss (Imaging)) |
| 44 | Radial Moment (SSC (Imaging)) |
| 45 | Short Axis Moment (FSC) |
| 46 | Short Axis Moment (LightLoss (Imaging)) |
| 47 | Short Axis Moment (SSC (Imaging)) |
| 48 | Size (FSC) |
| 49 | Size (LightLoss (Imaging)) |
| 50 | Size (SSC (Imaging)) |
| 51 | Total Intensity (FSC) |
| 52 | Total Intensity (LightLoss (Imaging)) |
| 53 | Total Intensity (SSC (Imaging)) |

An image of the particle may be generated from the data signals. One or more image parameters may be calculated from the generated images of the particle. A center of mass image parameter may be calculated from the generated image. A delta center of mass image parameter may be calculated from the generated image. A diffusivity image parameter may be calculated from the generated image. An eccentricity image parameter may be calculated from the generated image. A long axis moment image parameter may be calculated from the generated image. A maximum intensity image parameter may be calculated from the generated image. A radial moment image parameter may be calculated from the generated image. A short axis moment image parameter may be calculated from the generated image. A particle size image parameter may be calculated from the generated image. A total intensity image parameter may be calculated from the generated image. A particle light loss image parameter may be calculated from the generated image. A forward scattered light image parameter may be calculated from the generated image. A side scattered light image parameter may be calculated from the generated image. An image moment may be calculated from the generated image. The term "image moment" is used herein in its conventional sense to refer to a weighted average of pixel intensities in an image. The center of mass may be calculated from the image moment of the image. The orientation of the cell may be calculated from the image moment of the image. The eccentricity of the cell may be calculated from the image moment of the image.

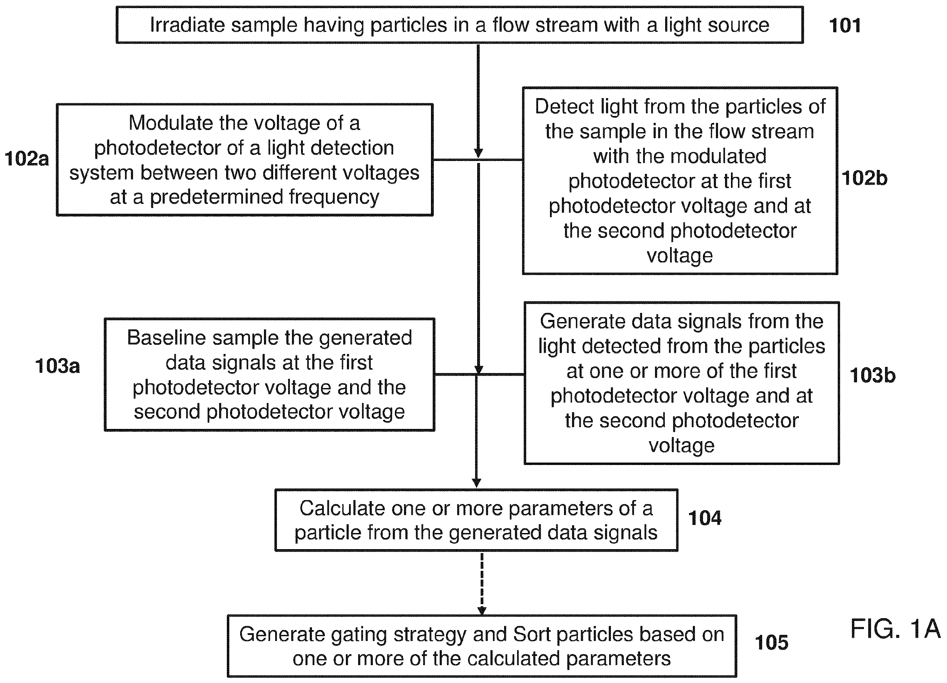

**FIG. 1A** depicts a flow chart for determining one or more parameters of a particle of a sample in a flow stream based on light detected with a modulated photodetector according to the present disclosure. At step 101, a sample having particles are irradiated in a flow stream with a light source. A photodetector of a light detection system is modulated at two different voltage settings at a predetermined frequency at step 102a. The system may be modulated at a first, higher voltage setting and at a second, lower voltage setting. The voltage setting may be modulated between the first and second photodetector voltages with a square-form voltage change. Light from the irradiated flow stream is detected with the modulated photodetector at step 102b. Data signals from the detected light is generated at one or more of the photodetector voltage settings at step 103b. Light may be detected only at the lower photodetector voltage setting when detector saturation is exhibited at the higher photodetector voltage setting. Light may be detected only at the higher photodetector voltage setting when the detector exhibits a high noise value in the generated data signals such as where the signal-to-noise ratio falls below a predetermined threshold. The method may include measuring a baseline sample of the generated data signals at the first photodetector voltage setting and at the second photodetector voltage setting (step 103a). The baseline may be interpreted for the dual-mode detection (at the first and second photodetector voltage settings) by fixed time-dependent analysis or by dynamic frequency domain derivation. One or more parameters, such as imaging parameters may be calculated based on the generated data signals at step 104. The imaging parameters may include side-scatter parameters or forward-scatter parameters. The method (step 105) may include generating one or more gating strategies based on the parameters of the particle and sorting the particle (e.g., into two or more different containers).

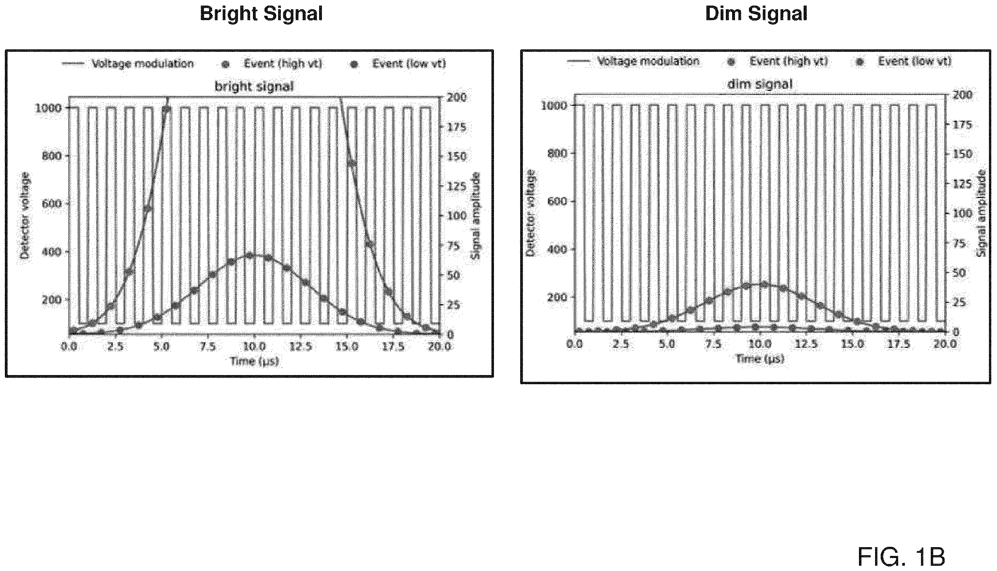

**FIG. 1B** depicts detecting light from a particle of a sample with a modulated photodetector according to the present disclosure. The photodetector may be modulated at two different voltage settings, a high voltage setting and a lower voltage setting shown with the square-form voltage change between the two different voltage settings. Data signals generated with the photodetector at the high voltage setting for a bright signal (left) and data signal generated with the photodetector at the low voltage setting for dim signal (right) are shown on each plot. As shown in the plot of the bright signal, the data signals generated at the low voltage setting are all within the detectable photodetector signal amplitude and do not exhibit any saturation. The data signals at the high voltage setting exhibit detector saturation for the bright signal. On the other hand, for the dim signal the generated data signals at the low voltage setting exhibit lower detectable photodetector signal amplitude and may exhibit low signal-to-noise ratio. The generated data signals of the dim signal at the higher voltage setting exhibits detectable photodetector signal amplitudes. Accordingly, modulating the photodetector according to the present disclosure provides for the accurate detection of both bright signals (where there is no saturation at the lower voltage setting) and dim signals (where there is sufficient signal-to-noise ratio at the higher voltage setting). Modulation of the photodetector voltage settings as described herein can provide for increased dynamic range of the photodetector which improves the detectable signal amplitudes of the photodetector as is illustrated in Figure 1B.

The sample analyzed in the instant methods a biological sample. The term "biological sample" is used in its conventional sense to refer to a whole organism, plant, fungi or a subset of animal tissues, cells or component parts which may in certain instances be found in blood, mucus, lymphatic fluid, synovial fluid, cerebrospinal fluid, saliva, bronchoalveolar lavage, amniotic fluid, amniotic cord blood, urine, vaginal fluid and semen. As such, a "biological sample" refers to both the native organism or a subset of its tissues as well as to a homogenate, lysate or extract prepared from the organism or a subset of its tissues, including but not limited to, for example, plasma, serum, spinal fluid, lymph fluid, sections of the skin, respiratory, gastrointestinal, cardiovascular, and genitourinary tracts, tears, saliva, milk, blood cells, tumors, organs. Biological samples may be any type of organismic tissue, including both healthy and diseased tissue (e.g., cancerous, malignant, necrotic, etc.). In the present disclosure, the biological sample is a liquid sample, such as blood or derivative thereof, e.g., plasma, tears, urine, semen, etc., where in some instances the sample is a blood sample, including whole blood, such as blood obtained from venipuncture or fingerstick (where the blood may or may not be combined with any reagents prior to assay, such as preservatives, anticoagulants, etc.).

In the present disclosure the source of the sample is a "mammal" or "mammalian", where these terms are used broadly to describe organisms which are within the class Mammalia, including the orders carnivore (e.g., dogs and cats), Rodentia (e.g., mice, guinea pigs, and rats), and primates (e.g., humans, chimpanzees, and monkeys). In some instances, the subjects are humans. The method may be applied to samples obtained from human subjects of both genders and at any stage of development (i.e., neonates, infant, juvenile, adolescent, adult), where in the present disclosure the human subject is a juvenile, adolescent or adult. While the present disclosure may be applied to samples from a human subject, it is to be understood that the methods may also be carried-out on samples from other animal subjects (that is, in "non-human subjects") such as, but not limited to, birds, mice, rats, dogs, cats, livestock and horses.

Cells of interest may be targeted for characterized according to a variety of parameters, such as a phenotypic characteristic identified via the attachment of a particular fluorescent label to cells of interest. The system may be configured to deflect analyzed droplets that are determined to include a target cell. A variety of cells may be characterized using the subject methods. Target cells of interest include, but are not limited to, stem cells, T cells, dendritic cells, B Cells, granulocytes, leukemia cells, lymphoma cells, virus cells (e.g., HIV cells), NK cells, macrophages, monocytes, fibroblasts, epithelial cells, endothelial cells, and erythroid cells. Target cells of interest include cells that have a convenient cell surface marker or antigen that may be captured or labelled by a convenient affinity agent or conjugate thereof. For example, the target cell may include a cell surface antigen such as CD11b, CD123, CD14, CD15, CD16, CD19, CD193, CD2, CD25, CD27, CD3, CD335, CD36, CD4, CD43, CD45RO, CD56, CD61, CD7, CD8, CD34, CD1c, CD23, CD304, CD235a, T cell receptor alpha/beta, T cell receptor gamma/delta, CD253, CD95, CD20, CD105, CD117, CD120b, Notch4, Lgr5 (N-Terminal), SSEA-3, TRA-1-60 Antigen, Disialoganglioside GD2 and CD71. The target cell may be selected from HIV containing cell, a Treg cell, an antigen-specific T -cell populations, tumor cells or hematopoietic progenitor cells (CD34+) from whole blood, bone marrow or cord blood.

In practicing the subject methods according to the present disclosure, an amount of an initial fluidic sample is injected into the flow cytometer. The amount of sample injected into the particle sorting module may vary, for example, ranging from 0.001 mL to 1000 mL, such as from 0.005 mL to 900 mL, such as from 0.01 mL to 800 mL, such as from 0.05 mL to 700 mL, such as from 0.1 mL to 600 mL, such as from 0.5 mL to 500 mL, such as from 1 mL to 400 mL, such as from 2 mL to 300 mL and including from 5 mL to 100 mL of sample.

The method may include counting and optionally sorting labeled particles (e.g., target cells) in a sample. The fluidic sample including the particles may first be introduced into a flow nozzle of the system. Upon exit from the flow nozzle, the particles are passed substantially one at a time through the sample interrogation region where each of the particles is irradiated to a source of light and measurements of light scatter parameters and, in some instances, fluorescent emissions as desired (e.g., two or more light scatter parameters and measurements of one or more fluorescent emissions) are separately recorded for each particle. Depending on the properties of the flow stream being interrogated, 0.001 mm or more of the flow stream may be irradiated with light, such as 0.005 mm or more, such as 0.01 mm or more, such as 0.05 mm or more, such as 0.1 mm or more, such as 0.5 mm or more and including 1 mm or more of the flow stream may be irradiated with light. In the present disclosure, the method may include irradiating a planar cross-section of the flow stream in the sample interrogation region, such as with a laser (as described above). The method may include irradiating a predetermined length of the flow stream in the sample interrogation region, such as corresponding to the irradiation profile of a diffuse laser beam or lamp.

In the present disclosure, the method may include irradiating the flow stream at or near the flow cell nozzle orifice. For example, the method may include irradiating the flow stream at a position about 0.001 mm or more from the nozzle orifice, such as 0.005 mm or more, such as 0.01 mm or more, such as 0.05 mm or more, such as 0.1 mm or more, such as 0.5 mm or more and including 1 mm or more from the nozzle orifice. In the present disclosure, the method may include irradiating the flow stream immediately adjacent to the flow cell nozzle orifice.

Detectors, such as photomultiplier tubes (PMT), may be used to record light that passes through each particle (in certain cases referred to as forward light scatter), light that is reflected orthogonal to the direction of the flow of the particles through the sensing region (in some cases referred to as orthogonal or side light scatter) and fluorescent light emitted from the particles, if it is labeled with fluorescent marker(s), as the particle passes through the sensing region and is illuminated by the energy source. Each of forward light scatter (FSC), side-scatter (SSC), and fluorescence emissions include a separate parameter for each particle (or each "event"). Thus, for example, two, three or four parameters can be collected (and recorded) from a particle labeled with two different fluorescence markers. The data recorded for each particle is analyzed in real time or stored in a data storage and analysis means, such as a computer, as desired.

In the present disclosure, the particles may be detected and uniquely identified by exposing the particles to excitation light and measuring the fluorescence of each particle in one or more detection channels, as desired. Fluorescence emitted in detection channels used to identify the particles and binding complexes associated therewith may be measured following excitation with a single light source, or may be measured separately following excitation with distinct light sources. If separate excitation light sources are used to excite the particle labels, the labels may be selected such that all the labels are excitable by each of the excitation light sources used.

The methods may also include data acquisition, analysis and recording, such as with a computer, wherein multiple data channels record data from each detector for the light scatter and fluorescence emitted by each particle as it passes through the sample interrogation region of the particle sorting module. Analysis may include classifying and counting particles such that each particle is present as a set of digitized parameter values. The subject systems may be set to trigger on a selected parameter in order to distinguish the particles of interest from background and noise. "Trigger" refers to a preset threshold for detection of a parameter and may be used as a means for detecting passage of a particle through the light source. Detection of an event that exceeds the threshold for the selected parameter triggers acquisition of light scatter and fluorescence data for the particle. Data is not acquired for particles or other components in the medium being assayed which cause a response below the threshold. The trigger parameter may be the detection of forward-scattered light caused by passage of a particle through the light beam. The flow cytometer then detects and collects the light scatter and fluorescence data for the particle.

A particular subpopulation of interest is then further analyzed by "gating" based on the data collected for the entire population. To select an appropriate gate, the data is plotted so as to obtain the best separation of subpopulations possible. This procedure may be performed by plotting forward light scatter (FSC) vs. side (i.e., orthogonal) light scatter (SSC) on a two-dimensional dot plot. A subpopulation of particles is then selected (i.e., those cells within the gate) and particles that are not within the gate are excluded. Where desired, the gate may be selected by drawing a line around the desired subpopulation using a cursor on a computer screen. Only those particles within the gate are then further analyzed by plotting the other parameters for these particles, such as fluorescence. Where desired, the above analysis may be configured to yield counts of the particles of interest in the sample.

The methods may further include employing particles in research, laboratory testing, or therapy. The subject method may include obtaining individual cells prepared from a target fluidic or tissue biological sample. For example, the subject methods include obtaining cells from fluidic or tissue samples to be used as a research or diagnostic specimen for diseases such as cancer. Likewise, the subject methods include obtaining cells from fluidic or tissue samples to be used in therapy. A cell therapy protocol is a protocol in which viable cellular material including, e.g., cells and tissues, may be prepared and introduced into a subject as a therapeutic treatment. Conditions that may be treated by the administration of the flow cytometrically sorted sample include, but are not limited to, blood disorders, immune system disorders, organ damage, etc.

A typical cell therapy protocol may include the following steps: sample collection, cell isolation, genetic modification, culture, and expansion in vitro, cell harvesting, sample volume reduction and washing, bio-preservation, storage, and introduction of cells into a subject. The protocol may begin with the collection of viable cells and tissues from source tissues of a subject to produce a sample of cells and/or tissues. The sample may be collected via any suitable procedure that includes, e.g., administering a cell mobilizing agent to a subject, drawing blood from a subject, removing bone marrow from a subject, etc. After collecting the sample, cell enrichment may occur via several methods including, e.g., centrifugation based methods, filter based methods, elutriation, magnetic separation methods, fluorescence-activated cell sorting (FACS), and the like. In some cases, the enriched cells may be genetically modified by any convenient method, e.g., nuclease mediated gene editing. The genetically modified cells can be cultured, activated, and expanded in vitro. In some cases, the cells are preserved, e.g., cryopreserved, and stored for future use where the cells are thawed and then administered to a patient, e.g., the cells may be infused in the patient.

### SYSTEMS

The present disclosure also includes a system for practicing the subject methods, e.g., modulating a photodetector in a light detection system (such as in a flow cytometer). The systems according to the present disclosure includes a light source configured to irradiate label-free particles of a sample. The light source may be any suitable broadband or narrow band source of light. Depending on the components in the sample (e.g., cells, beads, non-cellular particles, etc.), the light source may be configured to emit wavelengths of light that vary, ranging from 200 nm to 1500 nm, such as from 250 nm to 1250 nm, such as from 300 nm to 1000 nm, such as from 350 nm to 900 nm and including from 400 nm to 800 nm. For example, the light source may include a broadband light source emitting light having wavelengths from 200 nm to 900 nm. The light source may include a narrow band light source emitting a wavelength ranging from 200 nm to 900 nm. For example, the light source may be a narrow band LED (1 nm - 25 nm) emitting light having a wavelength ranging between 200 nm to 900 nm. The light source may be a laser. The subject system may include a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof. The subject system may include a dye laser, such as a stilbene, coumarin or rhodamine laser. Lasers of interest may include a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof. The subject system may include a solid-state laser, such as a ruby laser, an Nd:YAG laser, NdCrYAG laser, Er:YAG laser, Nd:YLF laser, Nd:YVO₄ laser, Nd:yCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The light source may be a non-laser light source, such as a lamp, including but not limited to a halogen lamp, deuterium arc lamp, xenon arc lamp, a light-emitting diode, such as a broadband LED with continuous spectrum, superluminescent emitting diode, semiconductor light emitting diode, wide spectrum LED white light source, an multi-LED integrated. The non-laser light source is a stabilized fiber-coupled broadband light source, white light source, among other light sources or any combination thereof.

The light source may be positioned any suitable distance from the sample (e.g., the flow stream in a flow cytometer), such as at a distance of 0.001 mm or more from the flow stream, such as 0.005 mm or more, such as 0.01 mm or more, such as 0.05 mm or more, such as 0.1 mm or more, such as 0.5 mm or more, such as 1 mm or more, such as 5 mm or more, such as 10 mm or more, such as 25 mm or more and including at a distance of 100 mm or more. In addition, the light source irradiate the sample at any suitable angle (e.g., relative the vertical axis of the flow stream), such as at an angle ranging from 10° to 90°, such as from 15° to 85°, such as from 20° to 80°, such as from 25° to 75° and including from 30° to 60°, for example at a 90° angle.

The light source may be configured to irradiate the sample continuously or in discrete intervals. The system may include a light source that is configured to irradiate the sample continuously, such as with a continuous wave laser that continuously irradiates the flow stream at the interrogation point in a flow cytometer. The system may include a light source configured to irradiate the sample at discrete intervals, such as every 0.001 milliseconds, every 0.01 milliseconds, every 0.1 milliseconds, every 1 millisecond, every 10 milliseconds, every 100 milliseconds and including every 1000 milliseconds, or some other interval. Where the light source is configured to irradiate the sample at discrete intervals, the system may include one or more additional components to provide for intermittent irradiation of the sample with the light source. For example, the system may include one or more laser beam choppers, manually or computer controlled beam stops for blocking and exposing the sample to the light source.

The light source may be a laser. Lasers of interest may include pulsed lasers or continuous wave lasers. For example, the laser may be a gas laser, such as a helium-neon laser, argon laser, krypton laser, xenon laser, nitrogen laser, CO₂ laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:YVO₄ laser, Nd:yCa₄O(BO₃)₃ laser, Nd:YCOB laser, titanium sapphire laser, thulim YAG laser, ytterbium YAG laser, ytterbium₂O₃ laser or cerium doped lasers and combinations thereof; a semiconductor diode laser, optically pumped semiconductor laser (OPSL), or a frequency doubled- or frequency tripled implementation of any of the above mentioned lasers.

In the present disclosure, the light source may be a light beam generator that is configured to generate two or more beams of frequency shifted light. The light beam generator may include a laser, a radiofrequency generator configured to apply radiofrequency drive signals to an acousto-optic device to generate two or more angularly deflected laser beams. The laser may be a pulsed lasers or continuous wave laser. For example lasers in light beam generators of interest may be a gas laser, such as a helium-neon laser, argon laser, krypton laser, xenon laser, nitrogen laser, CO2 laser, CO laser, argon-fluorine (ArF) excimer laser, krypton-fluorine (KrF) excimer laser, xenon chlorine (XeCl) excimer laser or xenon-fluorine (XeF) excimer laser or a combination thereof; a dye laser, such as a stilbene, coumarin or rhodamine laser; a metal-vapor laser, such as a helium-cadmium (HeCd) laser, helium-mercury (HeHg) laser, helium-selenium (HeSe) laser, helium-silver (HeAg) laser, strontium laser, neon-copper (NeCu) laser, copper laser or gold laser and combinations thereof; a solid-state laser, such as a ruby laser, an Nd:YAG laser, NdCrYAG laser, Er:YAG laser, Nd:YLF laser, Nd:YVO4 laser, Nd:yCa₄O(BO₃)₃ laser, Nd:YCOB laser, titanium sapphire laser, thulim YAG laser, ytterbium YAG laser, ytterbium₂O₃ laser or cerium doped lasers and combinations thereof.

The acousto-optic device may be any convenient acousto-optic protocol configured to frequency shift laser light using applied acoustic waves. In the present disclosure, the acousto-optic device may be an acousto-optic deflector. The acousto-optic device in the subject system is configured to generate angularly deflected laser beams from the light from the laser and the applied radiofrequency drive signals. The radiofrequency drive signals may be applied to the acousto-optic device with any suitable radiofrequency drive signal source, such as a direct digital synthesizer (DDS), arbitrary waveform generator (AWG), or electrical pulse generator.

A controller may be configured to apply radiofrequency drive signals to the acousto-optic device to produce the desired number of angularly deflected laser beams in the output laser beam, such as being configured to apply 3 or more radiofrequency drive signals, such as 4 or more radiofrequency drive signals, such as 5 or more radiofrequency drive signals, such as 6 or more radiofrequency drive signals, such as 7 or more radiofrequency drive signals, such as 8 or more radiofrequency drive signals, such as 9 or more radiofrequency drive signals, such as 10 or more radiofrequency drive signals, such as 15 or more radiofrequency drive signals, such as 25 or more radiofrequency drive signals, such as 50 or more radiofrequency drive signals and including being configured to apply 100 or more radiofrequency drive signals.

To produce an intensity profile of the angularly deflected laser beams in the output laser beam, the controller may be configured to apply radiofrequency drive signals having an amplitude that varies such as from about 0.001 V to about 500 V, such as from about 0.005 V to about 400 V, such as from about 0.01 V to about 300 V, such as from about 0.05 V to about 200 V, such as from about 0.1 V to about 100 V, such as from about 0.5 V to about 75 V, such as from about 1 V to 50 V, such as from about 2 V to 40 V, such as from 3 V to about 30 V and including from about 5 V to about 25 V. Each applied radiofrequency drive signal may have a frequency of from about 0.001 MHz to about 500 MHz, such as from about 0.005 MHz to about 400 MHz, such as from about 0.01 MHz to about 300 MHz, such as from about 0.05 MHz to about 200 MHz, such as from about 0.1 MHz to about 100 MHz, such as from about 0.5 MHz to about 90 MHz, such as from about 1 MHz to about 75 MHz, such as from about 2 MHz to about 70 MHz, such as from about 3 MHz to about 65 MHz, such as from about 4 MHz to about 60 MHz and including from about 5 MHz to about 50 MHz.

In the present disclosure, the controller may have a processor having memory operably coupled to the processor such that the memory includes instructions stored thereon, which when executed by the processor, cause the processor to produce an output laser beam with angularly deflected laser beams having a desired intensity profile. For example, the memory may include instructions to produce two or more angularly deflected laser beams with the same intensities, such as 3 or more, such as 4 or more, such as 5 or more, such as 10 or more, such as 25 or more, such as 50 or more and including memory may include instructions to produce 100 or more angularly deflected laser beams with the same intensities. They may include instructions to produce two or more angularly deflected laser beams with different intensities, such as 3 or more, such as 4 or more, such as 5 or more, such as 10 or more, such as 25 or more, such as 50 or more and including memory may include instructions to produce 100 or more angularly deflected laser beams with different intensities.

In the present disclosure, the controller may have a processor having memory operably coupled to the processor such that the memory includes instructions stored thereon, which when executed by the processor, cause the processor to produce an output laser beam having increasing intensity from the edges to the center of the output laser beam along the horizontal axis. The intensity of the angularly deflected laser beam at the center of the output beam may range from 0.1% to about 99% of the intensity of the angularly deflected laser beams at the edge of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the edge of the output laser beam along the horizontal axis. The controller may have a processor having memory operably coupled to the processor such that the memory includes instructions stored thereon, which when executed by the processor, cause the processor to produce an output laser beam having an increasing intensity from the edges to the center of the output laser beam along the horizontal axis. The intensity of the angularly deflected laser beam at the edges of the output beam may range from 0.1% to about 99% of the intensity of the angularly deflected laser beams at the center of the output laser beam along the horizontal axis, such as from 0.5% to about 95%, such as from 1% to about 90%, such as from about 2% to about 85%, such as from about 3% to about 80%, such as from about 4% to about 75%, such as from about 5% to about 70%, such as from about 6% to about 65%, such as from about 7% to about 60%, such as from about 8% to about 55% and including from about 10% to about 50% of the intensity of the angularly deflected laser beams at the center of the output laser beam along the horizontal axis. The controller may have a processor having memory operably coupled to the processor such that the memory includes instructions stored thereon, which when executed by the processor, cause the processor to produce an output laser beam having an intensity profile with a Gaussian distribution along the horizontal axis. The controller may have a processor having memory operably coupled to the processor such that the memory includes instructions stored thereon, which when executed by the processor, cause the processor to produce an output laser beam having a top hat intensity profile along the horizontal axis.

Light beam generators of interest may be configured to produce angularly deflected laser beams in the output laser beam that are spatially separated. Depending on the applied radiofrequency drive signals and desired irradiation profile of the output laser beam, the angularly deflected laser beams may be separated by 0.001 µm or more, such as by 0.005 µm or more, such as by 0.01 µm or more, such as by 0.05 µm or more, such as by 0.1 µm or more, such as by 0.5 µm or more, such as by 1 µm or more, such as by 5 µm or more, such as by 10 µm or more, such as by 100 µm or more, such as by 500 µm or more, such as by 1000 µm or more and including by 5000 µm or more. The system may be configured to produce angularly deflected laser beams in the output laser beam that overlap, such as with an adjacent angularly deflected laser beam along a horizontal axis of the output laser beam. The overlap between adjacent angularly deflected laser beams (such as overlap of beam spots) may be an overlap of 0.001 µm or more, such as an overlap of 0.005 µm or more, such as an overlap of 0.01 µm or more, such as an overlap of 0.05 µm or more, such as an overlap of 0.1 µm or more, such as an overlap of 0.5 µm or more, such as an overlap of 1 µm or more, such as an overlap of 5 µm or more, such as an overlap of 10 µm or more and including an overlap of 100 µm or more.

A light beam generator may be configured to generate two or more beams of frequency shifted light include laser excitation modules as described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

The system may include a light detection system having a photodetector configured to detect light emitted by the irradiated particles. As described in detail above, the photodetector is modulated between at least two different voltage settings at a predetermined frequency (e.g., a high voltage setting and a low voltage setting).

The light detection system may be configured to detect scattered light. The light detection system may include a side-scattered light detector. The light detection system may include a forward-scattered light detector. The light detection system may include multiple scattered light detectors, such as 2 or more, such as 3 or more, such as 4 or more, and including 5 or more. The subject light detection system may also include a fluorescent light detector configured to detect one or more fluorescent wavelengths of light. The light detection system may include multiple fluorescent light detectors such as 2 or more, such as 3 or more, such as 4 or more, 5 or more, 10 or more, 15 or more, and including 20 or more.

Detectors of interest may include, but are not limited to, optical sensors or detectors, such as active-pixel sensors (APSs), avalanche photodiodes, image sensors, charge-coupled devices (CCDs), intensified charge-coupled devices (ICCDs), light emitting diodes, photon counters, bolometers, pyroelectric detectors, photoresistors, photovoltaic cells, photodiodes, photomultiplier tubes (PMTs), phototransistors, quantum dot photoconductors or photodiodes and combinations thereof, among other detectors. In the present disclosure, the collected light may be measured with a charge-coupled device (CCD), semiconductor charge-coupled devices (CCD), active pixel sensors (APS), complementary metal-oxide semiconductor (CMOS) image sensors or N-type metal-oxide semiconductor (NMOS) image sensors. In the present disclosure, the detector may be a photomultiplier tube, such as a photomultiplier tube having an active detecting surface area of each region that ranges from 0.01 cm² to 10 cm², such as from 0.05 cm² to 9 cm², such as from 0.1 cm² to 8 cm², such as from 0.5 cm² to 7 cm² and including from 1 cm² to 5 cm².

Where the subject systems include multiple fluorescent light detectors, each fluorescent light detector may be the same, or the collection of fluorescent light detectors may be a combination of different types of detectors. For example, where the subject systems include two fluorescent light detectors, the first fluorescent light detector may be a CCD-type device and the second fluorescent light detector (or imaging sensor) may be a CMOS-type device. Both the first and second fluorescent light detectors may be CCD-type devices. Both the first and second fluorescent light detectors may be CMOS-type devices. The first fluorescent light detector may be a CCD-type device and the second fluorescent light detector may be a photomultiplier tube (PMT). The first fluorescent light detector may be a CMOS-type device and the second fluorescent light detector may be a photomultiplier tube. Both the first and second fluorescent light detectors may be photomultiplier tubes.

Fluorescent light detectors of interest may be configured to measure collected light at one or more wavelengths, such as at 2 or more wavelengths, such as at 5 or more different wavelengths, such as at 10 or more different wavelengths, such as at 25 or more different wavelengths, such as at 50 or more different wavelengths, such as at 100 or more different wavelengths, such as at 200 or more different wavelengths, such as at 300 or more different wavelengths and including measuring light emitted by a sample in the flow stream at 400 or more different wavelengths. In some embodiments, 2 or more detectors in the modules as described herein are configured to measure the same or overlapping wavelengths of collected light.

Fluorescent light detectors of interest may be configured to measure collected light over a range of wavelengths (e.g., 200 nm - 1000 nm). In the present disclosure, detectors of interest may be configured to collect spectra of light over a range of wavelengths. For example, flow cytometers may include one or more detectors configured to collect spectra of light over one or more of the wavelength ranges of 200 nm - 1000 nm. Detectors of interest may be configured to measure light emitted by a sample in the flow stream at one or more specific wavelengths. For example, modules may include one or more detectors configured to measure light at one or more of 450 nm, 518 nm, 519 nm, 561 nm, 578 nm, 605 nm, 607 nm, 625 nm, 650 nm, 660 nm, 667 nm, 670 nm, 668 nm, 695 nm, 710 nm, 723 nm, 780 nm, 785 nm, 647 nm, 617 nm and any combinations thereof. In the present disclosure, one or more detectors may be configured to be paired with specific fluorophores, such as those used with the sample in a fluorescence assay.

The system may be configured for modulating the voltage of the photodetector between at least a first voltage and a second voltage. The system may be configured to modulate the photodetector between 3 or more voltages, such as between 4 or more, 5 or more, 6 or more, 7 or more and including 8 or more different voltages. The system may be configured to modulate the voltage of photodetector between a first photodetector voltage and a second photodetector voltage. The voltage of the photodetector may be modulated between the first photodetector voltage and the second photodetector voltage at a frequency of from 0.0001 MHz to 15 MHz, such as from 0.0005 MHz to 14 MHz, such as from 0.001 MHz to 13 MHz, such as from 0.005 MHz to 12 MHz, such as from 0.01 MHz to 11 MHz, such as from 0.05 MHz to 10 MHz, such as from 0.1 MHz to 9 MHz, such as from 0.5 MHz to 8 MHz, such as from 1 MHz to 7 MHz, such as from 1 MHz to 6 MHz and including from 1 MHz to 5 MHz. The voltage of the photodetector may oscillate between the first photodetector voltage and the second photodetector voltage at a frequency of from 0.1 MHz to 1 MHz. The photodetector voltage may be modulated at a frequency of from 0.0001 MHz to 5 MHz, such as from 0.0005 MHz to 6 MHz, such as from 0.001 MHz to 7 MHz, such as from 0.005 MHz to 8 MHz, such as from 0.01 MHz to 9 MHz, such as from 0.05 MHz to 10 MHz, such as from 0.1 MHz to 11 MHz, such as from 0.5 MHz to 12 MHz, such as from 1 MHz to 13 MHz, such as from 1 MHz to 14 MHz and including from 1 MHz to 15 MHz. The photodetector voltage may be modulated at a frequency of from 0.0001 MHz to 1 MHz, such as from 0.0001 MHz to 2 MHz, such as from 0.0001 MHz to 3 MHz, such as from 0.0001 MHz to 4 MHz, such as from 0.0001 MHz to 5 MHz, such as from 0.0001 MHz to 6 MHz, such as from 0.0001 MHz to 7 MHz, such as from 0.0001 MHz to 8 MHz, such as from 0.0001 MHz to 9 MHz, such as from 0.0001 MHz to 10 MHz, such as from 0.0001 MHz to 11 MHz, such as from 0.0001 MHz to 12 MHz, such as from 0.0001 MHz to 13 MHz, such as from 0.0001 MHz to 14 MHz and including from 0.0001 MHz to 15 MHz.

The system may be configured to maintain the voltage of the photodetector at the voltage for 25 µs or less per period, such as 20 µs or less per period, such as 15 µs or less per period, such as 10 µs or less per period, such as 9 µs or less per period, such as 8 µs or less per period, such as 7 µs or less per period, such as 6 µs or less per period, such as 5 µs or less per period, such as 4 µs or less per period, such as 3 µs or less per period, such as 2 µs or less per period, such as 1 µs or less per period, such as 0.9 µs or less per period, such 0.8 µs or less per period, such as 0.7 µs or less per period, such as 0.6 µs or less per period, such as 0.5 µs or less per period, such as 0.4 µs or less per period, such as 0.3 µs or less per period, such as 0.2 µs or less per period, such as 0.1 µs or less per period and including for 0.05 µs or less per period. The system may be configured to maintain the voltage of the photodetector at the first photodetector voltage during each modulation cycle. The system may be configured to maintain the voltage of the photodetector at the first photodetector voltage for 25 µs or less per period, such as 20 µs or less per period, such as 15 µs or less per period, such as 10 µs or less per period, such as 9 µs or less per period, such as 8 µs or less per period, such as 7 µs or less per period, such as 6 µs or less per period, such as 5 µs or less per period, such as 4 µs or less per period, such as 3 µs or less per period, such as 2 µs or less per period, such as 1 µs or less per period, such as 0.9 µs or less per period, such 0.8 µs or less per period, such as 0.7 µs or less per period, such as 0.6 µs or less per period, such as 0.5 µs or less per period, such as 0.4 µs or less per period, such as 0.3 µs or less per period, such as 0.2 µs or less per period, such as 0.1 µs or less per period and including for 0.05 µs or less per period. The system may be configured to maintain the voltage of the photodetector at the second photodetector voltage for 25 µs or less per period, such as 20 µs or less per period, such as 15 µs or less per period, such as 10 µs or less per period, such as 9 µs or less per period, such as 8 µs or less per period, such as 7 µs or less per period, such as 6 µs or less per period, such as 5 µs or less per period, such as 4 µs or less per period, such as 3 µs or less per period, such as 2 µs or less per period, such as 1 µs or less per period, such as 0.9 µs or less per period, such 0.8 µs or less per period, such as 0.7 µs or less per period, such as 0.6 µs or less per period, such as 0.5 µs or less per period, such as 0.4 µs or less per period, such as 0.3 µs or less per period, such as 0.2 µs or less per period, such as 0.1 µs or less per period and including for 0.05 µs or less per period. The system may be configured to maintain the voltage of the photodetector at the first photodetector voltage for the same duration as at the second photodetector voltage. The system may be configured to maintain the voltage of the photodetector at the first photodetector voltage for a different duration than at the second photodetector voltage. Where the voltage of the photodetector is maintained at the first photodetector voltage for a different duration than at the second photodetector voltage, the voltage may be maintained at the different voltage for 1 or more modulation cycles, such as 2 or more, such as 3 or more, such as 4 or more, such as 5 or more, such as 10 or more, such as 25 or more, such as 50 or more, such as 100 or more, such as 250 or more, such as 500 or more and including 100 or more modulation cycles.

The system may be configured to set the first photodetector voltage to be from 250 mV to 2500 mV, such as from 300 mV to 2400 mV, such as from 400 mV to 2300 mV, such as from 500 mV to 2200 mV, such as from 500 mV to 2100 mV, such as from 500 mV to 2000 mV, such as from 500 mV to 1900 mV, such as from 500 mV to 1800 mV, such as from 500 mV to 1700 mV, such as from 500 mV to 1600 mV, such as from 500 mV to 1500 mV, such as from 500 mV to 1400 mV, such as from 500 mV to 1300 mV, such as from 500 mV to 1200 mV, such as from 500 mV to 1100 mV and including from 500 mV to 1000 mV. The system may be configured to set the second photodetector voltage o be from 0.0001 mV to 1000 mV, such as from 0.0005 mV to 900 mV, such as from 0.001 mV to 800 mV, such as from 0.005 mV to 700 mV, such as from 0.01 mV to 600 mV, such as from 0.05 mV to 500 mV, such as from 0.1 mV to 500 mV, such as from 0.5 mV to 500 mV and including from 1 mV to 500 mV. The system may be configured to set the second photodetector voltage to be 50 mV or less, such as 40 mV or less, such as 30 mV or less, such as 20 mV or less, such as 10 mV or less and including 5 mV or less.

The voltage of the photodetector may be modulated between the first photodetector voltage and the second photodetector voltage by any convenient waveform change, such as where the voltage is modulated with a sine-wave type voltage change. In the present disclosure, the system may be configured to modulate the voltage of the photodetector between the first photodetector voltage and the second photodetector voltage with a square-form voltage change. The system may be configured to modulate the photodetector voltage between each modulation cycle with a symmetrical voltage change (e.g., all square-form voltage changes). One or more modulation cycles may exhibit a different type of voltage change waveform such as where the modulation cycles exhibit a square-form voltage change and one or more modulation cycles exhibit a sine-wave type voltage change. The system may be configured to change the voltage change shape at predetermined intervals, such as after every 2 or more modulation cycles, such as 3 or more, such as 4 or more, such as 5 or more, such as 10 or more, such as 25 or more, such as 50 or more, such as 100 or more and including every 500 or more modulation cycles.

The light detection system may be configured to generate data signals at one or more of the photodetector voltages from the detected light. The light detection system may be configured to generate 2 or more data signals at each of the photodetector voltages during each modulation cycle, such as 3 or more, such as 4 or more, such as 5 or more, such as 10 or more, such as 25 or more, such as 50 or more and including generating 100 or more data signals at each of the photodetector voltage during each modulation cycle. Light may be detected at the photodetector voltage and the data signals are averaged. The system may be configured to generate data signals at the first photodetector voltage during each modulation cycle. The system may be configured go generate data signals at the second photodetector voltage during each modulation cycle. The system may be configured to generate data signals at the first photodetector voltage and at the second photodetector voltage during each modulation cycle.

The system may be configured to only generate data signals at the first photodetector voltage during each modulation cycle, such as where 2 or more data signals are generated at only the first photodetector voltage during each modulation cycle, such as 3 or more, such as 4 or more, such as 5 or more and including generating 10 or more data signals at the first photodetector voltage during each modulation cycle. The system may be configured to only generate data signals at the second photodetector voltage during each modulation cycle, such as where 2 or more data signals are generated at only the first photodetector voltage during each modulation cycle, such as 3 or more, such as 4 or more, such as 5 or more and including generating 10 or more data signals at the first photodetector voltage during each modulation cycle.

The system may be configured for generating data signals at the second photodetector voltage when the light detected at the first photodetector voltage exceeds a saturation threshold for the photodetector, such as where the light detected exceeds the saturation threshold by 5% or more, such as by 10% or more, such as by 15% or more, such as by 25% or more, such as by 50% or more and including where the light detected at the first photodetector voltage exceed the saturation threshold for the photodetector by 75% or more. Where the light detected at the first photodetector voltage exhibits a detector saturation level greater than a saturation threshold, the system may be configured for generating data signals only from the light detected at the second photodetector voltage. Where the light detected at the first photodetector voltage exceeds a saturation threshold, the system may be configured to generate an alert to indicate that the saturation has been exceeded or is approaching a level where the data signals are unreliable or inaccurate. The system may also be configured to switch the photodetector voltage to the second photodetector voltage in response to the alert.

The system may be configured for generating data signals at the first photodetector voltage when the generated data signals at the second photodetector voltage exceed a detected noise threshold, such as where the signal-to-noise ratio falls below a predetermined threshold. The noise of the photodetector at the second photodetector voltage may be sufficient to obscure or diminish the reliability of the generated data signals at the second photodetector voltage. The system may be configured for generating data signals at the first photodetector voltage when the generated data signals at the second photodetector voltage fall below the noise threshold for the photodetector by 5% or more, such as by 10% or more, such as by 15% or more, such as by 25% or more, such as by 50% or more and including where the data signals at the second photodetector voltage fall below the noise threshold for the photodetector by 75% or more. Where the data signals generated at the second photodetector voltage exhibit too much noise (such as where the signal-to-noise ratio falls below the threshold), the system is configured for only generating data signals from the light detected at the first photodetector voltage. Where the data signals generated at the second photodetector voltage fall below a noise threshold, the system is configured to generate an alert to indicate that the signal-to-noise ratio of the data signals generated at the second photodetector voltage are too low or is approaching a level where the data signals are unreliable or inaccurate. The system may be configured for switching the photodetector voltage to the first photodetector voltage in response to the alert.

Photodetector voltage may be at the second photodetector voltage. The system may also include a processor having memory operably coupled to the processor where the memory includes instructions stored thereon, which when executed by the processor, cause the processor to measure a baseline sample at the first photodetector voltage and at the second photodetector voltage. The memory may include instructions for generating data signals based on the baseline sample. The memory may include instructions for calculating the baseline noise at each photodetector voltage during each modulation cycle. The memory may include instructions for calibrating baseline noise at each photodetector voltage. The memory may include instructions for measuring baseline sample at each photodetector voltage at a baseline sampling frequency. The memory may include instructions for measuring a baseline sample at a frequency that is greater than the modulation frequency. The memory may include instructions for measuring a baseline sample at a frequency that is less than the modulation frequency. The memory may include instructions for measuring a baseline sample at a frequency that is equal to the modulation frequency. The memory may include instructions for measuring a baseline sample at a baseline sampling frequency, such as at a frequency of 0.0001 MHz to 15 MHz, such as from 0.0005 MHz to 14 MHz, such as from 0.001 MHz to 13 MHz, such as from 0.005 MHz to 12 MHz, such as from 0.01 MHz to 11 MHz, such as from 0.05 MHz to 10 MHz, such as from 0.1 MHz to 9 MHz, such as from 0.5 MHz to 8 MHz, such as from 1 MHz to 7 MHz, such as from 1 MHz to 6 MHz and including from 1 MHz to 5 MHz.

The memory may include instructions for interpreting the baseline at the first photodetector voltage and at the second photodetector voltage (i.e., dual-mode operation) by a fixed time-dependent analysis. The baseline may be interpreted at the first photodetector voltage and at the second photodetector voltage by a dynamic frequency domain derivation. The memory may include instructions for scaling the generated data signals. The memory may include instructions for scaling the data signals on a continuous scale. The memory may include instructions for scaling the data signals on a single continuous scale and dividing the generated data signals at one or more of the first photodetector voltage and the second photodetector voltage by the gain at which the detector settings that were being used for modulation. The first photodetector voltage and the second photodetector voltage may be scaled as two separate parameters.

The memory may include instructions for determining one or more parameters of particles in the sample from data signals generated from light detected at the first photodetector voltage. The memory may include instructions for determining one or more parameters of particles in the sample from data signals generated from light detected at the second photodetector voltage. The memory may include instructions for determining one or more parameters of particles in the sample data signals generated from light detected at the first photodetector voltage and light detected at the second photodetector voltage.

The memory may include instructions for generating an image of the particle from the data signals. The memory may include instructions for calculating one or more image parameters from the generated images of the particle. A center of mass image parameter may be calculated from the generated image. A delta center of mass image parameter may be calculated from the generated image. A diffusivity image parameter may be calculated from the generated image. An eccentricity image parameter may be calculated from the generated image. A long axis moment image parameter may be calculated from the generated image. A maximum intensity image parameter may be calculated from the generated image. A radial moment image parameter may be calculated from the generated image. A short axis moment image parameter may be calculated from the generated image. A particle size image parameter may be calculated from the generated image A total intensity image parameter may be calculated from the generated image. A particle light loss image parameter may be calculated from the generated image. A forward scattered light image parameter may be calculated from the generated image. A side scattered light image parameter may be calculated from the generated image. An image moment may be calculated from the generated image. The term "image moment" is used herein in its conventional sense to refer to a weighted average of pixel intensities in an image. The center of mass may be calculated from the image moment of the image. The orientation of the cell may be calculated from the image moment of the image. The eccentricity of the cell may be calculated from the image moment of the image.

In the present disclosure, the light detection system described herein may be part of a flow cytometer. Flow cytometers may include any suitable mechanism(s) for providing sheath fluid and sample fluid to the sample fluid input coupler and sheath fluid input coupler. For example, the sample fluid input coupler may be fluidically connected to a sample fluid line (e.g., tubing) fluidically connected to a sample fluid reservoir. Similarly, the sheath fluid input coupler may be fluidically connected to a sheath fluid line fluidically connected to a sheath fluid reservoir. Similarly, flow cytometers may include any suitable mechanism(s) for managing waste from the flow stream. The fluidic output coupler may be fluidically connected to a waste line fluidically connected to a waste reservoir. Fluid management systems that may be adapted for use in the subject flow cytometers are provided in U.S. Patent Application Publication No. 2022/0341838.

The flow cytometer may include a flow cell. Flow cells of interest include a cuvette configured to transport particles in a flow stream. As discussed herein, a "flow cell" is described in its conventional sense to refer to a component containing a flow channel for a liquid flow stream for transporting particles in a sheath fluid. Cuvettes of interest have a passage (i.e., flow channel) running therethrough. The flow stream for which the flow channel is configured may include a liquid sample injected from a sample tube. The flow cell includes a light-accessible flow channel. The cuvette may be comprised of, e.g., quartz, glass, clear plastic, and the like. Cuvettes may be formed from silica, such as fused silica. In some cases, the flow cell is configured for irradiation with light from a light source at one or more interrogation points. The "interrogation point" discussed herein refers to a region within the flow cell in which the particle is irradiated by light from the light source, e.g., for analysis. The size of the interrogation point may vary as desired. For example, where 0 µm represents the optical axis of light emitted by the light source, the interrogation point may range from -50 µm to 50 µm, such as -25 µm to 40 µm, and including -15 µm to 30 µm. Depending on certain considerations (e.g., the number and arrangement of lasers), multiple irradiation points may exist within the flow cells.

The flow cell may include, or may be configured for use with, a sample injection port configured to provide a sample to the flow cell. The sample injection system may be configured to provide suitable flow of sample to the flow cell inner chamber (i.e., flow channel). Depending on the desired characteristics of the flow stream, the rate of sample conveyed to the flow cell chamber by the sample injection port may be1 µL/min or more, such as 2 µL/min or more, such as 3 µL/min or more, such as 5 µL/min or more, such as 10 µL/min or more, such as 15 µL/min or more, such as 25 µL/min or more, such as 50 µL/min or more and including 100 µL/min or more, where in the rate of sample conveyed to the flow cell chamber by the sample injection port may be 1µL/sec or more, such as 2 µL/sec or more, such as 3 µL/sec or more, such as 5 µL/sec or more, such as 10 µL/sec or more, such as 15 µL/sec or more, such as 25 µL/sec or more, such as 50 µL/sec or more and including 100 µL/sec or more.

The sample injection port may be an orifice positioned in a wall of the inner chamber or may be a conduit positioned at the proximal end of the inner chamber. Where the sample injection port is an orifice positioned in a wall of the inner chamber, the sample injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, etc., as well as irregular shapes, e.g., a parabolic bottom portion coupled to a planar top portion. In the present disclosure, the sample injection port may have a circular orifice. The size of the sample injection port orifice may vary depending on shape, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

The sample injection port may be a conduit positioned at a proximal end of the flow cell inner chamber. For example, the sample injection port may be a conduit positioned to have the orifice of the sample injection port in line with the flow cell orifice. Where the sample injection port is a conduit positioned in line with the flow cell orifice, the cross-sectional shape of the sample injection tube may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The orifice of the conduit may vary depending on shape, having an opening ranging from 0.1 mm to 5.0 mm, e.g., 0.2 to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm. The shape of the tip of the sample injection port may be the same or different from the cross-section shape of the sample injection tube. For example, the orifice of the sample injection port may include a beveled tip having a bevel angle ranging from 1° to 10°, such as from 2° to 9°, such as from 3° to 8°, such as from 4° to 7° and including a bevel angle of 5°.

The flow cell may also include a sheath fluid injection port configured to provide a sheath fluid to the flow cell. The sheath fluid injection system may be configured to provide a flow of sheath fluid to the flow cell inner chamber, for example in conjunction with the sample to produce a laminated flow stream of sheath fluid surrounding the sample flow stream. Depending on the desired characteristics of the flow stream, the rate of sheath fluid conveyed to the flow cell chamber by the may be 25 µL/sec or more, such as 50 µL/sec or more, such as 75 µL/sec or more, such as 100 µL/sec or more, such as 250 µL/sec or more, such as 500 µL/sec or more, such as 750 µL/sec or more, such as 1000 µL/sec or more and including 2500 µL/sec or more.

The sheath fluid injection port may be an orifice positioned in a wall of the inner chamber. The sheath fluid injection port orifice may be any suitable shape where cross-sectional shapes of interest include, but are not limited to: rectilinear cross-sectional shapes, e.g., squares, rectangles, trapezoids, triangles, hexagons, etc., curvilinear cross-sectional shapes, e.g., circles, ovals, as well as irregular shapes, e.g., a parabolic bottom portion coupled to a planar top portion. The size of the sheath fluid injection port orifice may vary depending on shape, having an opening ranging from 0.1 mm to 5.0 mm, e.g., 0.2 mm to 3.0 mm, e.g., 0.5 mm to 2.5 mm, such as from 0.75 mm to 2.25 mm, such as from 1 mm to 2 mm and including from 1.25 mm to 1.75 mm, for example 1.5 mm.

The system may include or may be operationally coupled to a flow cytometer. Suitable flow cytometry systems may include, but are not limited to those described in Ormerod (ed.), Flow Cytometry: A Practical Approach, Oxford Univ. Press (1997); Jaroszeski et al. (eds.), Flow Cytometry Protocols, Methods in Molecular Biology No. 91, Humana Press (1997); Practical Flow Cytometry, 3rd ed., Wiley-Liss (1995); Virgo, et al. (2012) Ann Clin Biochem. Jan;49(pt 1):17-28; Linden, et. al., Semin Throm Hemost. 2004 Oct;30(5):502-11; Alison, et al. J Pathol, 2010 Dec; 222(4):335-344; and Herbig, et al. (2007) Crit Rev Ther Drug Carrier Syst. 24(3):203-255. Flow cytometry systems of interest include BD Biosciences FACSCanto^{™} flow cytometer, BD Biosciences FACSCanto^{™} II flow cytometer, BD Accuri^{™} flow cytometer, BD Accuri^{™} C6 Plus flow cytometer, BD Biosciences FACSCelesta^{™} flow cytometer, BD Biosciences FACSLyric^{™} flow cytometer, BD Biosciences FACSVerse^{™} flow cytometer, BD Biosciences FACSymphony^{™} flow cytometer, BD Biosciences LSRFortessa^{™} flow cytometer, BD Biosciences LSRFortessa^{™} X-20 flow cytometer, BD Biosciences FACSPresto^{™} flow cytometer, BD Biosciences FACSVia^{™} flow cytometer and BD Biosciences FACSCalibur^{™} cell sorter, a BD Biosciences FACSCount^{™} cell sorter, BD Biosciences FACSLyric^{™} cell sorter, BD Biosciences Via^{™} cell sorter, BD Biosciences Influx^{™} cell sorter, BD Biosciences Jazz^{™} cell sorter, BD Biosciences Aria^{™} cell sorter, BD Biosciences FACSAria^{™} II cell sorter, BD Biosciences FACSAria^{™} III cell sorter, BD Biosciences FACSAria^{™} Fusion cell sorter and BD Biosciences FACSMelody^{™} cell sorter, BD Biosciences FACSymphony^{™} S6 cell sorter, BD Biosciences FACSDiscover^{™} cell sorter, or the like.

The subject systems may be flow cytometric systems, such those described in U.S. Patent Nos. 10,663,476; 10,620,111; 10,613,017; 10,605,713; 10,585,031; 10,578,542; 10,578,469; 10,481,074; 10,302,545; 10,145,793; 10,113,967; 10,006,852; 9,952,076; 9,933,341; 9,726,527; 9,453,789; 9,200,334; 9,097,640; 9,095,494; 9,092,034; 8,975,595; 8,753,573; 8,233,146; 8,140,300; 7,544,326; 7,201,875; 7,129,505; 6,821,740; 6,813,017; 6,809,804; 6,372,506; 5,700,692; 5,643,796; 5,627,040; 5,620,842; 5,602,039; 4,987,086; 4,498,766.

The flow cytometer may be configured as an imaging flow cytometer. For example, the subject system may be a flow cytometry system configured for imaging particles in a flow stream by fluorescence imaging using radiofrequency tagged emission (FIRE), such as those described in Diebold, et al. Nature Photonics Vol. 7(10); 806-810 (2013) as well as described in U.S. Patent Nos. 9,423,353; 9,784,661; 9,983,132; 10,006,852; 10,036,699; 10,078,045; 10,222,316; 10,288,546; 10,324,019; 10,408,758; 10,451,538; 10,620,111; 10,684,211; 10,845,295; 10,935,482; 10,935,485; 11,105,728; 11,280,718; 11,327,016; 11,366,052; 11,371,937; 11,692,926; 11,630,053; 11,774,343; 11,940,369; and 11,946,851.

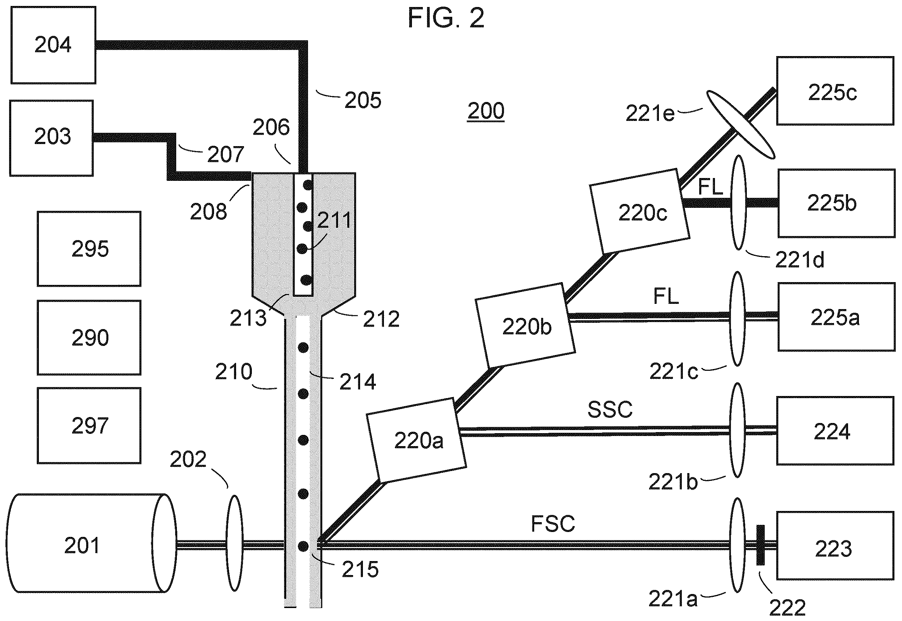

**FIG. 2** shows a system 200 for flow cytometry in accordance with the present disclosure. System 200 includes a laser 201 configured to irradiate particles 211 in flow stream 214 at interrogation point 215 within flow cell 210. While the example of **FIG. 2** shows a single laser, it is understood that multiple lasers could also be used. The laser beam from laser 201 is directed to focusing lens 202 which focuses the beam onto the portion of a fluid stream where particles 211 of a sample are located, within the flow cell 210. The flow cell 210 is part of a fluidics system which directs particles, typically one at a time, in a stream to the focused laser beam for interrogation. Alternatively, where the flow cytometer is a stream-in-air cytometer, a nozzle top may be employed.

As shown in **FIG. 2****,** flow cell 210 is fluidically connected to sheath fluid reservoir 203 comprising a sheath fluid and sample fluid reservoir 204 comprising a sample fluid. Sheath fluid from sheath fluid reservoir 203 is provided to at least one sheath fluid injection port 208 via conduit (i.e., sheath fluid line) 207. In addition, sample fluid containing particles 211 from sample fluid reservoir 204 is provided to sample injection port 206 via conduit (i.e., sample fluid line) 205. Sample injection port 206 is fluidically connected to sample injector 213 (e.g., sample injection needle) which is configured to introduce particles 211 into the interior of flow cell 210. Particles 211 are hydrodynamically focused via sheath fluid entering from sheath fluid injection port 208 such that flow stream 214 forms downstream of tapered portion 212 of flow cell 210. Particles emitting at the distal end of flow cell 210 may be disposed of and/or collected via any suitable protocol. For example, depending on the type of flow cytometry being performed, particles may be collected at the distal end of flow cell 210, e.g., via a waste line. Alternatively, particles may be sorted.

The light from the laser beam(s) interacts with the particles 211 in the sample by diffraction, refraction, reflection, scattering, and absorption with re-emission at various different wavelengths depending on the characteristics of the particle such as its size, internal structure, and the presence of one or more fluorescent molecules attached to or naturally present on or in the particle. The fluorescence emissions as well as the diffracted light, refracted light, reflected light, and scattered light may be routed to one or more detectors. In particular, forward scattered light (FSC) is routed to forward-scattered light detector 223. The forward-scattered light detector 223 is positioned slightly off axis from the direct beam through the flow cell 210 and is configured to detect diffracted light, the excitation light that travels through or around the particle in mostly a forward direction. The intensity of the light detected by the forward-scattered light detector 223 is dependent on the overall size of the particle. The forward-scatter detector can include, e.g., a photodiode. Positioned between forward-scattered light detector 223 are optical filter 221a and scatter bar 222. Optical filter 221a may be configured to filter out at least one wavelength of non-FSC light, while scatter bar 222 may be configured to prevent the incident beam from laser 201 (i.e., non-scattered light) from being detected by forward-scattered light detector 223.

In addition, side-scattered light (SSC) is detected by side-scattered light detector 224. In other words, side-scattered light detector 224 is configured to detect refracted and reflected light from the surfaces and internal structures of the particles 211 that tend to increase with increasing particle complexity of structure. In the example of **FIG. 2****,** flow cytometer 200 includes dichroic mirror 220a configured to reflect SSC light to side-scattered light detector 224 while passing non-SSC (e.g., fluorescent) light. Optical filter 221b is configured to prevent at least one wavelength of non-SSC light from being detected by side-scattered light detector 224. Also shown are fluorescent light detectors 225a-225c which are each configured to detect different wavelengths of fluorescent light. For example, dichroic mirror 220b may be configured to reflect fluorescent light (FL) corresponding to a first wavelength (or range of wavelengths) to fluorescent light detector 225a while passing other wavelengths of light. Optical filter 221c may be configured to prevent at least one wavelength of light that does not correspond to the first wavelength (or range of wavelengths) from being detected by fluorescent light detector 225a. Similarly, dichroic mirror 220c is configured to reflect FL light corresponding to a second wavelength (or range of wavelengths) to fluorescent light detector 225b while passing a third wavelength of light (or range of wavelengths) for detection by fluorescent light detector 225c. Optical filter 221d is configured to prevent at least one wavelength of light that does not correspond to the second wavelength (or range of wavelengths) from being detected by fluorescent light detector 225b. In addition, Optical filter 221e is configured to prevent at least one wavelength of light that does not correspond to the third wavelength (or range of wavelengths) from being detected by fluorescent light detector 225c.

One of skill in the art will recognize that a flow cytometer in accordance with the present disclosure is not limited to the flow cytometer depicted in **FIG. 2****,** but can include any flow cytometer known in the art. For example, a flow cytometer may have any number of lasers, beam splitters, filters, and detectors at various wavelengths and in various different configurations. For example, while **FIG. 2** shows 3 fluorescent light detectors for illustrative purposes, it is understood that any suitable number of fluorescent light detectors may be employed.

In operation, cytometer operation is controlled by a controller/processor 290, and the measurement data from the detectors can be stored in the memory 295 and processed by the controller/processor 290. Although not shown explicitly, the controller/processor 290 is coupled to the detectors to receive the output signals therefrom, and may also be coupled to electrical and electromechanical components of the flow cytometer to control the laser 201, fluid flow parameters, and the like. Input/output (I/O) capabilities 297 may be provided also in the system. The memory 295, controller/processor 290, and I/O 297 may be entirely provided as an integral part of the flow cytometer. A display may also form part of the I/O capabilities 297 for presenting experimental data to users of the cytometer 200. Alternatively, some or all of the memory 295 and controller/processor 290 and I/O capabilities may be part of one or more external devices such as a general purpose computer. Some or all of the memory 295 and controller/processor 290 can be in wireless or wired communication with the cytometer 210. The controller/processor 290 in conjunction with the memory 295 and the I/O 297 can be configured to perform various functions related to the preparation and analysis of a flow cytometer experiment.

Different fluorescent molecules in a fluorochrome panel used for a flow cytometer experiment will emit light in their own characteristic wavelength bands. The particular fluorescent labels used for an experiment and their associated fluorescent emission bands may be selected to generally coincide with the filter windows of the detectors. The I/O 297 can be configured to receive data regarding a flow cytometer experiment having a panel of fluorescent labels and a plurality of cell populations having a plurality of markers, each cell population having a subset of the plurality of markers. The I/O 297 can also be configured to receive biological data assigning one or more markers to one or more cell populations, marker density data, emission spectrum data, data assigning labels to one or more markers, and cytometer configuration data. Flow cytometer experiment data, such as label spectral characteristics and flow cytometer configuration data can also be stored in the memory 295. The controller/processor 290 can be configured to evaluate one or more assignments of labels to markers.

The subject system may be a particle sorting system configured to sort particles with an enclosed particle sorting module, such as those described in U.S. Patent Publication No. 2017/0299493, filed on March 28, 2017. In the present disclosure, particles (e.g., cells) of the sample may be sorted using a sort decision module having a plurality of sort decision units, such as those described in U.S. Patent Publication No. 2020/0256781, filed on December 23, 2019. A system for sorting components of a sample include a particle sorting module having deflection plates, such as described in U.S. Patent Publication No. 2017/0299493, filed on March 28, 2017.

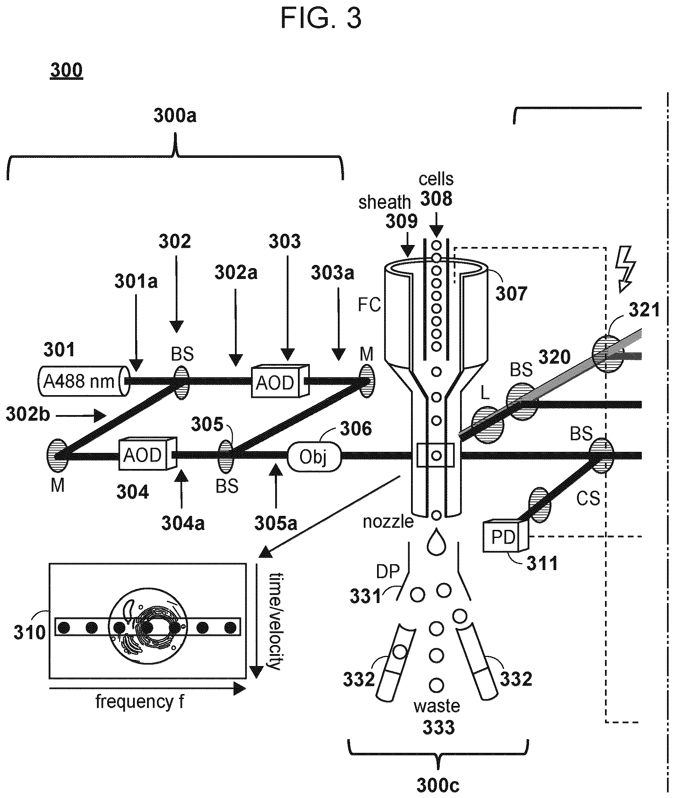

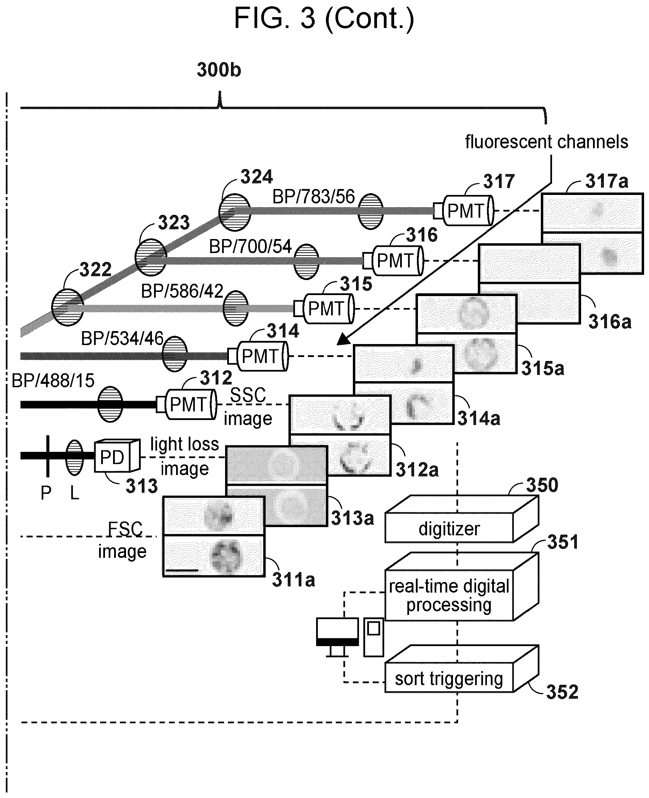

In the present disclosure, the system may be a fluorescence imaging using radiofrequency tagged emission image-enabled particle sorter, such as depicted in **FIG.** 3. Particle sorter 300 includes a light irradiation component 300a which includes light source 301 (e.g., 488 nm laser) which generates output beam of light 301a that is split with beamsplitter 302 into beams 302a and 302b. Light beam 302a is propagated through acousto-optic device (e.g., an acousto-optic deflector, AOD) 303 to generate an output beam 303a having one or more angularly deflected beams of light. Output beam 303a generated from acousto-optic device 303 includes a local oscillator beam and a plurality of radiofrequency comb beams. Light beam 302b is propagated through acousto-optic device (e.g., an acousto-optic deflector, AOD) 304 to generate an output beam 304a having one or more angularly deflected beams of light. Output beam 304a generated from acousto-optic device 304 may include a local oscillator beam and a plurality of radiofrequency comb beams. Output beams 303a and 304a generated from acousto-optic devices 303 and 304, respectively are combined with beamsplitter 305 to generate output beam 305a which is conveyed through an optical component 306 (e.g., an objective lens) to irradiate particles in flow cell 307. In the present disclosure, acousto-optic device 303 (AOD) may split a single laser beam into an array of beamlets, each having different optical frequency and angle. Second AOD 304 tunes the optical frequency of a reference beam, which is then overlapped with the array of beamlets at beam combiner 305. In the present disclosure, the light irradiation system having a light source and acousto-optic device can also include those described in Schraivogel, et al. ("High-speed fluorescence image-enabled cell sorting" Science (2022), 375 (6578): 315-320) and United States Patent Publication No. 2021/0404943.

Output beam 305a irradiates sample particles 308 propagating through flow cell 307 (e.g., with sheath fluid 309) at irradiation region 310. As shown in irradiation region 310, a plurality of beams (e.g., angularly deflected radiofrequency shifted beams of light depicted as dots across irradiation region 310) overlaps with a reference local oscillator beam (depicted as the shaded line across irradiation region 310). Due to their differing optical frequencies, the overlapping beams exhibit a beating behavior, which causes each beamlet to carry a sinusoidal modulation at a distinct frequency f₁₋ₙ.

Light from the irradiated sample is conveyed to light detection system 300b that includes a plurality of photodetectors. Light detection system 300b includes forward scattered light photodetector 311 for generating forward scatter images 311a and a side scattered light photodetector 312 for generating side scatter images 312a. Light detection system 300b also includes brightfield photodetector 313 for generating light loss images 313a. Forward scatter detector 311 and side scatter detector 312 may be photodiodes (e.g., avalanche photodiodes, APDs). Brightfield photodetector 313 may be a photomultiplier tube (PMT). Fluorescence from the irradiated sample is also detected with fluorescence photodetectors 314-317. Photodetectors 314-317 may be photomultiplier tubes. Light from the irradiated sample is directed to the side scatter detection channel 312 and fluorescence detection channels 314-317 through beamsplitter 320. Light detection system 300b includes bandpass optical components 321, 322, 323 and 324 (e.g., dichroic mirrors) for propagating predetermined wavelength of light to photodetectors 314-317. Optical component 321 may be a 534 nm/40 nm bandpass. Optical component 322 may be a 586 nm/42 nm bandpass. Optical component 323 may be a 700 nm/54 nm bandpass. Optical component 324 may be a 783 nm/56 nm bandpass. The first number represents the center of a spectral band. The second number provides a range of the spectral band. Thus, a 510/20 filter extends 10 nm on each side of the center of the spectral band, or from 500 nm to 520 nm.

Data signals generated in response to light detected in scattered light detection channels 311 and 312, brightfield light detection channel 313 and fluorescence detection channels 314-317 are processed by real-time digital processing with processors 350 and 351. Images 311a-317a can be generated in each light detection channel based on the data signals generated in processors 350 and 351. Image-enabled sorting is performed in response to a sort signal generated in sort trigger 352. Sorting component 300c includes deflection plates 331 for deflecting particles into sample containers 332 or to waste stream 333. Sort component 300c may be configured to sort particles with an enclosed particle sorting module, such as those described in U.S. Patent Publication No. 2017/0299493, filed on March 28, 2017. In the present disclosure, sorting component 300c may include a sort decision module having a plurality of sort decision units, such as those described in U.S. Patent Publication No. 2020/0256781.

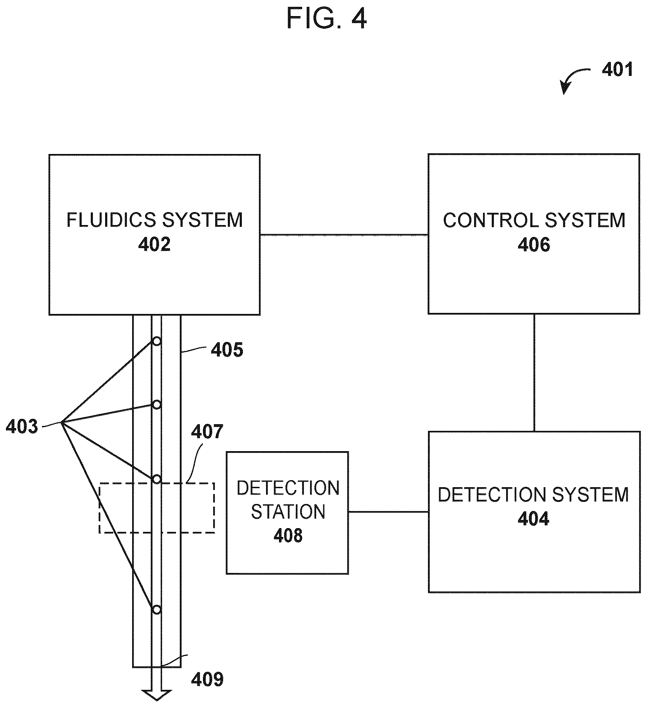

The system may be particle analyzers where the particle analysis system 401 **(****FIG. 4****)** can be used to analyze and characterize particles, with or without physically sorting the particles into collection vessels. **FIG. 4** shows a functional block diagram of a particle analysis system for computational based sample analysis and particle characterization. The particle analysis system 401 may be a flow system. The particle analysis system 401 includes a fluidics system 402. The fluidics system 402 can include or be coupled with a sample tube 405 and a moving fluid column within the sample tube in which particles 403 (e.g. cells) of a sample move along a common sample path 409.

The particle analysis system 401 includes a detection system 404 configured to collect a signal from each particle as it passes one or more detection stations along the common sample path. A detection station 408 generally refers to a monitored area 407 of the common sample path. Detection can, in some implementations, include detecting light or one or more other properties of the particles 403 as they pass through a monitored area 407. In **FIG. 4****,** one detection station 408 with one monitored area 407 is shown. Some implementations of the particle analysis system 401 can include multiple detection stations. Furthermore, some detection stations can monitor more than one area.

Each signal is assigned a signal value to form a data point for each particle. As described above, this data can be referred to as event data. The data point can be a multidimensional data point including values for respective properties measured for a particle. The detection system 404 is configured to collect a succession of such data points in a first-time interval.

The particle analysis system 401 can also include a control system 406. The control system 406 can include one or more processors, an amplitude control circuit and/or a frequency control circuit. The control system shown can be operationally associated with the fluidics system 402. The control system can be configured to generate a calculated signal frequency for at least a portion of the first-time interval based on a Poisson distribution and the number of data points collected by the detection system 404 during the first time interval. The control system 406 can be further configured to generate an experimental signal frequency based on the number of data points in the portion of the first time interval. The control system 406 can additionally compare the experimental signal frequency with that of a calculated signal frequency or a predetermined signal frequency.

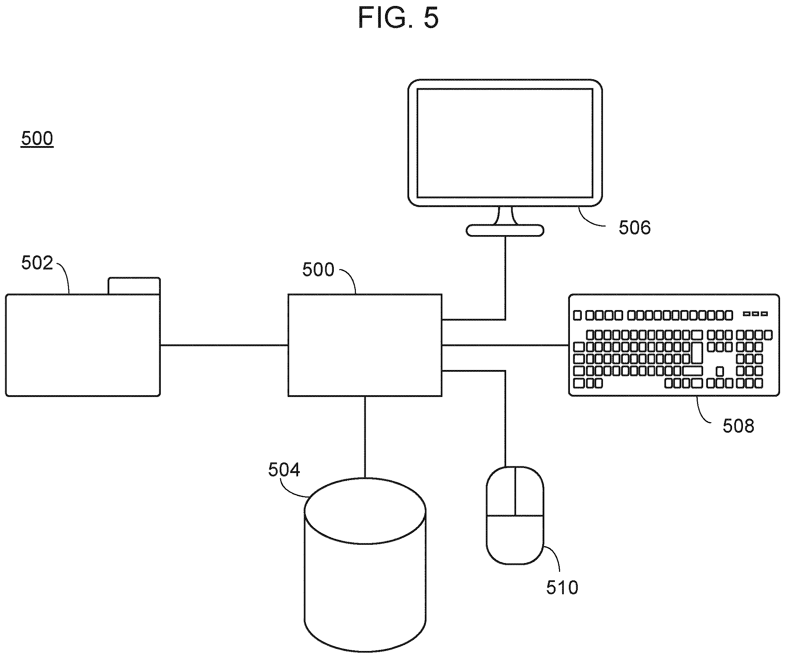

**FIG. 5** shows a functional block diagram for one example of a particle analyzer control system, such as an analytics controller (i.e., processor) 500, for analyzing and displaying biological events. An analytics controller 500 can be configured to implement a variety of processes for controlling graphic display of biological events.

A particle analyzer or sorting system 502 can be configured to acquire biological event data. For example, a flow cytometer can generate flow cytometric event data. The particle analyzer 502 can be configured to provide biological event data to the analytics controller 500. A data communication channel can be included between the particle analyzer or sorting system 502 and the analytics controller 500. The biological event data can be provided to the analytics controller 500 via the data communication channel. Analytics controller 500 may be a processor configured to carry out methods of the invention, e.g., by applying a distance-based classification model to determine a density distinguishing threshold in a size-based analyte feature space, applying a density-based clustering algorithm to separate the analyte data into a high-density cluster and a low-density cluster based on the density threshold and classifying the analyte data based on the high-density cluster and the low density cluster based on the size-based analyte feature space.

The analytics controller 500 can be configured to receive biological event data from the particle analyzer or sorting system 502. The biological event data received from the particle analyzer or sorting system 502 can include flow cytometric event data. The analytics controller 500 can be configured to provide a graphical display including a first plot of biological event data to a display device 506. The analytics controller 500 can be further configured to render a region of interest as a gate around a population of biological event data shown by the display device 506, overlaid upon the first plot, for example. The gate can be a logical combination of one or more graphical regions of interest drawn upon a single parameter histogram or bivariate plot. The display can be used to display particle parameters or saturated detector data.

The analytics controller 500 can be further configured to display the biological event data on the display device 506 within the gate differently from other events in the biological event data outside of the gate. For example, the analytics controller 500 can be configured to render the color of biological event data contained within the gate to be distinct from the color of biological event data outside of the gate. The display device 506 can be implemented as a monitor, a tablet computer, a smartphone, or other electronic device configured to present graphical interfaces.

The analytics controller 500 can be configured to receive a gate selection signal identifying the gate from a first input device. For example, the first input device can be implemented as a mouse 510. The mouse 510 can initiate a gate selection signal to the analytics controller 500 identifying the gate to be displayed on or manipulated via the display device 506 (e.g., by clicking on or in the desired gate when the cursor is positioned there). In some implementations, the first device can be implemented as the keyboard 508 or other means for providing an input signal to the analytics controller 500 such as a touchscreen, a stylus, an optical detector, or a voice recognition system. Some input devices can include multiple inputting functions. In such implementations, the inputting functions can each be considered an input device. For example, as shown in **FIG. 5****,** the mouse 510 can include a right mouse button and a left mouse button, each of which can generate a triggering event.

The triggering event can cause the analytics controller 500 to alter the manner in which the data is displayed, which portions of the data is actually displayed on the display device 506, and/or provide input to further processing such as selection of a population of interest for particle sorting.

The analytics controller 500 can be configured to detect when gate selection is initiated by the mouse 510. The analytics controller 500 can be further configured to automatically modify plot visualization to facilitate the gating process. The modification can be based on the specific distribution of biological event data received by the analytics controller 500.

The analytics controller 500 can be connected to a storage device 504. The storage device 504 can be configured to receive and store biological event data from the analytics controller 500. The storage device 504 can also be configured to receive and store flow cytometric event data from the analytics controller 500. The storage device 504 can be further configured to allow retrieval of biological event data, such as flow cytometric event data, by the analytics controller 500.

A display device 506 can be configured to receive display data from the analytics controller 500. The display data can comprise plots of biological event data and gates outlining sections of the plots. The display device 506 can be further configured to alter the information presented according to input received from the analytics controller 500 in conjunction with input from the particle analyzer 502, the storage device 504, the keyboard 508, and/or the mouse 510.

The analytics controller 500 can generate a user interface to receive example events for sorting. For example, the user interface can include a control for receiving example events or example images. The example events or images or an example gate can be provided prior to collection of event data for a sample, or based on an initial set of events for a portion of the sample.

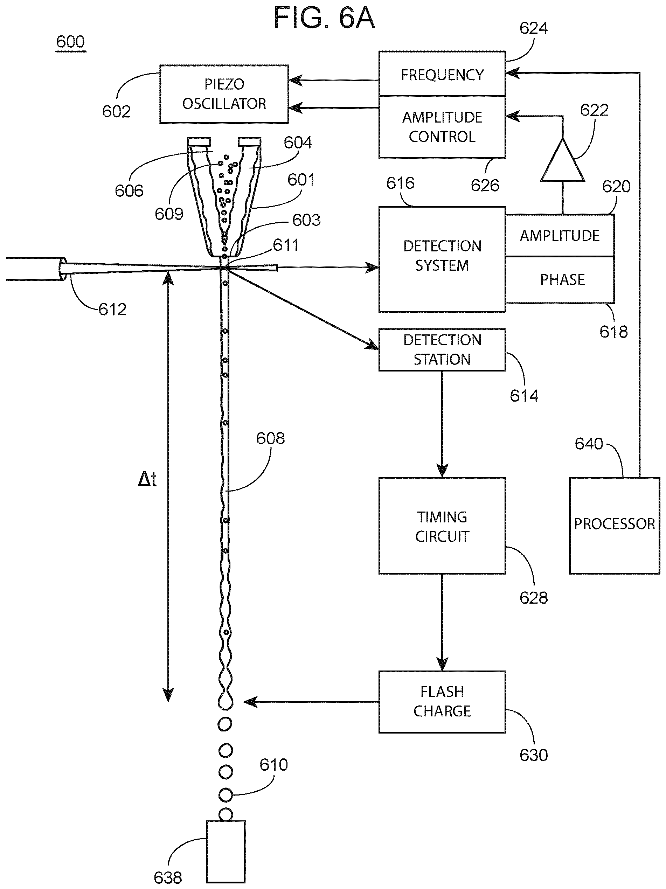

**FIG. 6A** is a schematic drawing of a particle sorter system 600 (e.g., the particle analyzer or sorting system 502) in accordance with the present disclosure. The particle sorter system 600 may be a cell sorter system. As shown in **FIG. 6A****,** a drop formation transducer 602 (e.g., piezo-oscillator) is coupled to a fluid conduit 601, which can be coupled to, can include, or can be, a nozzle 603. Within the fluid conduit 601, sheath fluid 604 hydrodynamically focuses a sample fluid 606 comprising particles 609 into a moving fluid column 608 (e.g., a stream). Within the moving fluid column 608, particles 609 (e.g., cells) are lined up in single file to cross a monitored area 611 (e.g., where laser-stream intersect), irradiated by an irradiation source 612 (e.g., a laser). Vibration of the drop formation transducer 602 causes moving fluid column 608 to break into a plurality of drops 610, some of which contain particles 609.

In operation, a detection station 614 (e.g., an event detector) identifies when a particle of interest (or cell of interest) crosses the monitored area 611. Detection station 614 feeds into a timing circuit 628, which in turn feeds into a flash charge circuit 630. At a drop break off point, informed by a timed drop delay (Δt), a flash charge can be applied to the moving fluid column 608 such that a drop of interest carries a charge. The drop of interest can include one or more particles or cells to be sorted. The charged drop can then be sorted by activating deflection plates (not shown) to deflect the drop into a vessel such as a collection tube or a multi- well or microwell sample plate where a well or microwell can be associated with drops of particular interest. As shown in **FIG. 6A****,** the drops can be collected in a drain receptacle 638.

A detection system 616 (e.g., a drop boundary detector) serves to automatically determine the phase of a drop drive signal when a particle of interest passes the monitored area 611. An exemplary drop boundary detector is described in U.S. Pat. No. 7,679,039. The detection system 616 allows the instrument to accurately calculate the place of each detected particle in a drop. The detection system 616 can feed into an amplitude signal 620 and/or phase 618 signal, which in turn feeds (via amplifier 622) into an amplitude control circuit 626 and/or frequency control circuit 624. The amplitude control circuit 626 and/or frequency control circuit 624, in turn, controls the drop formation transducer 602. The amplitude control circuit 626 and/or frequency control circuit 624 can be included in a control system.

Sort electronics (e.g., the detection system 616, the detection station 614 and a processor 640) can be coupled with a memory configured to store the detected events and a sort decision based thereon. The sort decision can be included in the event data for a particle. In some implementations, the detection system 616 and the detection station 614 can be implemented as a single detection unit or communicatively coupled such that an event measurement can be collected by one of the detection system 616 or the detection station 614 and provided to the non-collecting element.

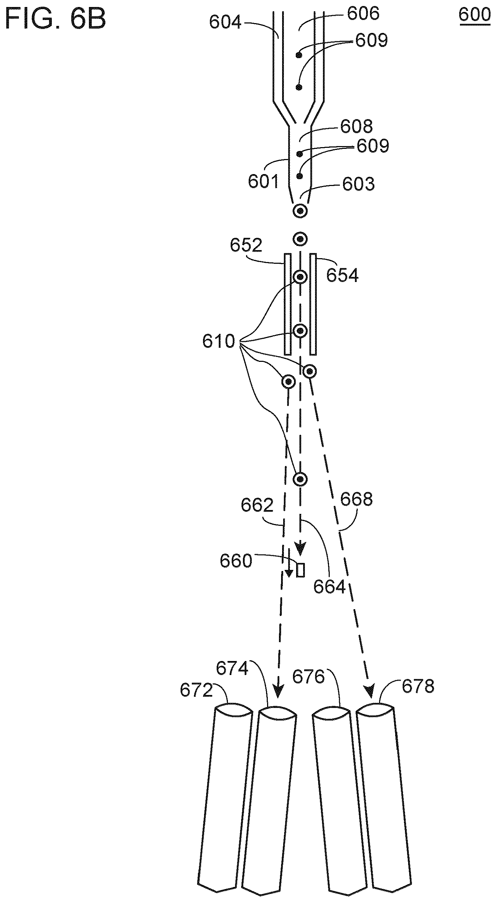

**FIG. 6B** is a schematic drawing of a particle sorter system, in accordance with the present disclosure. The particle sorter system 600 shown in **FIG. 6B****,** includes deflection plates 652 and 654. A charge can be applied via a stream-charging wire in a barb. This creates a stream of droplets 610 containing particles 610 for analysis. The particles can be illuminated with one or more light sources (e.g., lasers) to generate light scatter and fluorescence information. The information for a particle is analyzed such as by sorting electronics or other detection system (not shown in FIG. 6B). The deflection plates 652 and 654 can be independently controlled to attract or repel the charged droplet to guide the droplet toward a destination collection receptacle (e.g., one of 672, 674, 676, or 678). As shown in **FIG. 6B****,** the deflection plates 652 and 654 can be controlled to direct a particle along a first path 662 toward the receptacle 674 or along a second path 668 toward the receptacle 678. If the particle is not of interest (e.g., does not exhibit scatter or illumination information within a specified sort range), deflection plates may allow the particle to continue along a flow path 664. Such uncharged droplets may pass into a waste receptacle such as via aspirator 670.

The sorting electronics can be included to initiate collection of measurements, receive fluorescence signals for particles, and determine how to adjust the deflection plates to cause sorting of the particles. **FIG. 6B** includes the BD FACSAria^{™} line of flow cytometers commercially provided by Becton, Dickinson and Company (Franklin Lakes, NJ).

### COMPUTER-CONTROLLED SYSTEMS

Systems may include a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor, or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as Java, Perl, C++, Python, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques. The processor may include analog electronics which provide feedback control, such as for example negative feedback control.

The system memory may be any of a variety of known or future memory storage devices. Examples include any commonly available random access memory (RAM), magnetic medium such as a resident hard disk or tape, an optical medium such as a read and write compact disc, flash memory devices, or other memory storage device. The memory storage device may be any of a variety of known or future devices, including a compact disk drive, a tape drive, or a diskette drive. Such types of memory storage devices typically read from, and/or write to, a program storage medium (not shown) such as a compact disk. Any of these program storage media, or others now in use or that may later be developed, may be considered a computer program product. As will be appreciated, these program storage media typically store a computer software program and/or data. Computer software programs, also called computer control logic, typically are stored in system memory and/or the program storage device used in conjunction with the memory storage device.

A computer program product is described comprising a computer usable medium having control logic (computer software program, including program code) stored therein. The control logic, when executed by the processor the computer, causes the processor to perform functions described herein. Some functions may be implemented primarily in hardware using, for example, a hardware state machine. Implementation of the hardware state machine so as to perform the functions described herein will be apparent to those skilled in the relevant arts.

Memory may be any suitable device in which the processor can store and retrieve data, such as magnetic, optical, or solid-state storage devices (including magnetic or optical disks or tape or RAM, or any other suitable device, either fixed or portable). The processor may include a general-purpose digital microprocessor suitably programmed from a computer readable medium carrying necessary program code. Programming can be provided remotely to processor through a communication channel, or previously saved in a computer program product such as memory or some other portable or fixed computer readable storage medium using any of those devices in connection with memory. For example, a magnetic or optical disk may carry the programming, and can be read by a disk writer/reader. Systems of the disclosure also include programming, e.g., in the form of computer program products, algorithms for use in practicing the methods as described above. Programming according to the present disclosure can be recorded on computer readable media, e.g., any medium that can be read and accessed directly by a computer. Such media include, but are not limited to: magnetic storage media, such as floppy discs, hard disc storage medium, and magnetic tape; optical storage media such as CD-ROM; electrical storage media such as RAM and ROM; portable flash drive; and hybrids of these categories such as magnetic/optical storage media.

The processor may also have access to a communication channel to communicate with a user at a remote location. By remote location is meant the user is not directly in contact with the system and relays input information to an input manager from an external device, such as a computer connected to a Wide Area Network ("WAN"), telephone network, satellite network, or any other suitable communication channel, including a mobile telephone (i.e., smartphone).

The system according to the present disclosure may be configured to include a communication interface. The communication interface may include a receiver and/or transmitter for communicating with a network and/or another device. The communication interface can be configured for wired or wireless communication, including, but not limited to, radio frequency (RF) communication (e.g., Radio-Frequency Identification (RFID), Zigbee communication protocols, Wi-Fi, infrared, wireless Universal Serial Bus (USB), Ultra Wide Band (UWB), Bluetooth^{®} communication protocols, and cellular communication, such as code division multiple access (CDMA) or Global System for Mobile communications (GSM).

The communication interface may be configured to include one or more communication ports, e.g., physical ports or interfaces such as a USB port, a USB-C port, an RS-232 port, or any other suitable electrical connection port to allow data communication between the subject systems and other external devices such as a computer terminal (for example, at a physician's office or in hospital environment) that is configured for similar complementary data communication.

The communication interface may be configured for infrared communication, Bluetooth^{®} communication, or any other suitable wireless communication protocol to enable the subject systems to communicate with other devices such as computer terminals and/or networks, communication enabled mobile telephones, personal digital assistants, or any other communication devices which the user may use in conjunction.

The communication interface may be configured to provide a connection for data transfer utilizing Internet Protocol (IP) through a cell phone network, Short Message Service (SMS), wireless connection to a personal computer (PC) on a Local Area Network (LAN) which is connected to the internet, or Wi-Fi connection to the internet at a Wi-Fi hotspot.

The subject system may be configured to wirelessly communicate with a server device via the communication interface, e.g., using a common standard such as 802.11 or Bluetooth^{®} RF protocol, or an IrDA infrared protocol. The server device may be another portable device, such as a smart phone, Personal Digital Assistant (PDA) or notebook computer; or a larger device such as a desktop computer, appliance, etc. The server device may have a display, such as a liquid crystal display (LCD), as well as an input device, such as buttons, a keyboard, mouse or touch-screen.

The communication interface may be configured to automatically or semi-automatically communicate data stored in the subject systems, e.g., in an optional data storage unit, with a network or server device using one or more of the communication protocols and/or mechanisms described above.

Output controllers may include controllers for any of a variety of known display devices for presenting information to a user, whether a human or a machine, whether local or remote. If one of the display devices provides visual information, this information typically may be logically and/or physically organized as an array of picture elements. A graphical user interface (GUI) controller may include any of a variety of known or future software programs for providing graphical input and output interfaces between the system and a user, and for processing user inputs. The functional elements of the computer may communicate with each other via system bus. Some of these communications may be accomplished using network or other types of remote communications. The output manager may also provide information generated by the processing module to a user at a remote location, e.g., over the Internet, phone or satellite network, in accordance with known techniques. The presentation of data by the output manager may be implemented in accordance with a variety of known techniques. As some examples, data may include SQL, HTML or XML documents, email or other files, or data in other forms. The data may include Internet URL addresses so that a user may retrieve additional SQL, HTML, XML, or other documents or data from remote sources. The one or more platforms present in the subject systems may be any type of known computer platform or a type to be developed in the future, although they typically will be of a class of computer commonly referred to as servers. However, they may also be a main-frame computer, a workstation, or other computer type. They may be connected via any known or future type of cabling or other communication system including wireless systems, either networked or otherwise. They may be co-located or they may be physically separated. Various operating systems may be employed on any of the computer platforms, possibly depending on the type and/or make of computer platform chosen. Appropriate operating systems include Windows^{®} NT^{®}, Windows^{®} XP, Windows^{®} 7, Windows^{®} 8, Windows^{®} 10, iOS^{®}, macOS^{®}, Linux^{®}, Ubuntu^{®}, Fedora^{®}, OS/400^{®}, i5/OS^{®}, IBM i^{®}, Android^{™}, SGI IRIX^{®}, Oracle Solaris^{®} and others.

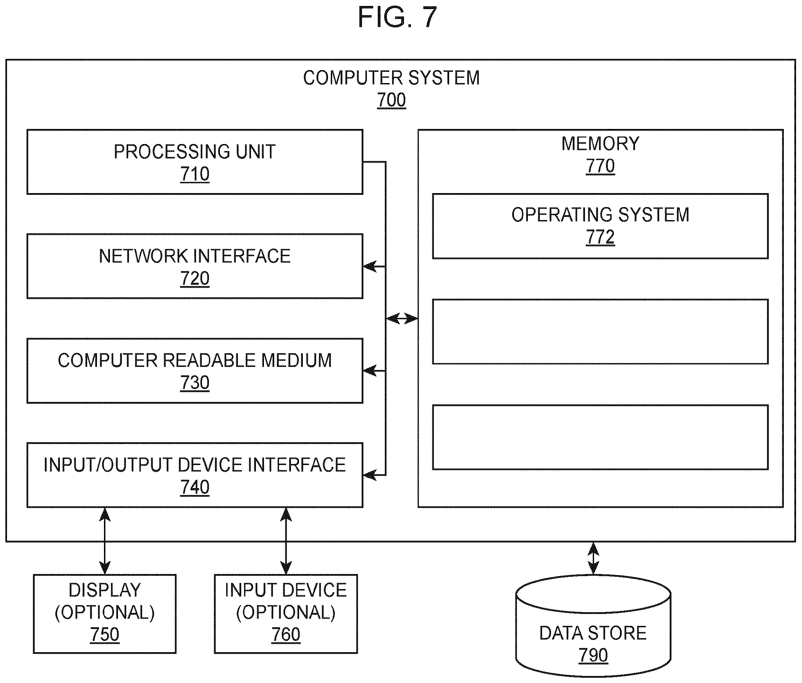

**FIG. 7** depicts a general architecture of an example computing device 700 according to the present disclosure. The general architecture of the computing device 700 depicted in **FIG. 7** includes an arrangement of computer hardware and software components. It is not necessary, however, that all of these generally conventional elements be shown in order to provide an enabling disclosure. As illustrated, the computing device 700 includes a processing unit 710, a network interface 720, a computer readable medium drive 730, an input/output device interface 740, a display 750, and an input device 760, all of which may communicate with one another by way of a communication bus. The network interface 720 may provide connectivity to one or more networks or computing systems. The processing unit 710 may thus receive information and instructions from other computing systems or services via a network. The processing unit 710 may also communicate to and from memory 770 and further provide output information for an optional display 750 via the input/output device interface 740. For example, an analysis software (e.g., data analysis software or program such as FlowJo^{®}) stored as executable instructions in the non-transitory memory of the analysis system can display the flow cytometry event data to a user. The input/output device interface 740 may also accept input from the optional input device 760, such as a keyboard, mouse, digital pen, microphone, touch screen, gesture recognition system, voice recognition system, gamepad, accelerometer, gyroscope, or other input device.

The memory 770 may contain computer program instructions (grouped as modules or components) that the processing unit 710 may execute. The memory 770 generally includes RAM, ROM and/or other persistent, auxiliary or non-transitory computer-readable media. The memory 770 may store an operating system 772 that provides computer program instructions for use by the processing unit 710 in the general administration and operation of the computing device 700. Data may be stored in data storage device 790. The memory 770 may further include computer program instructions and other information for implementing aspects of the present disclosure.

### NON-TRANSITORY COMPUTER-READABLE STORAGE MEDIA

Aspects of the present disclosure further include non-transitory computer readable storage media having instructions for practicing the subject methods, such as to practice one or more computer implemented methods described herein. Computer readable storage media may be employed on one or more computers for complete automation or partial automation of a system for practicing methods described herein. In the present disclosure, instructions in accordance with the method described herein can be coded onto a computer-readable medium in the form of "programming", where the term "computer readable medium" as used herein refers to any non-transitory storage medium that participates in providing instructions and data to a computer for execution and processing. Examples of suitable non-transitory storage media include a floppy disk, hard disk, optical disk, magneto-optical disk, CD-ROM, CD-R, magnetic tape, non-volatile memory card, ROM, DVD-ROM, Blue-ray disk, solid state disk, and network attached storage (NAS), whether or not such devices are internal or external to the computer. A file containing information can be "stored" on computer readable medium, where "storing" means recording information such that it is accessible and retrievable at a later date by a computer. The computer-implemented method described herein can be executed using programming that can be written in one or more of any number of computer programming languages. Such languages include, for example, Python, Java, Java Script, C, C#, C++, Go, R, Swift, PHP, as well as many others.

The non-transitory computer readable storage medium may include an algorithm for irradiating with a light source a sample comprising particles in a flow stream, algorithm for detecting light from the particles in the sample with a light detection system comprising a photodetector, where the voltage of the photodetector is modulated between a first voltage and a second voltage at a modulation frequency, algorithm for generating data signals from the light detected from the particles at one or more of the first photodetector voltage and at the second photodetector voltage and algorithm for determining one or more parameters of the particle from the generated data signals.

The non-transitory computer readable storage medium may include an algorithm for modulating the voltage of the photodetector between the first voltage and the second voltage at a frequency of from 0.005 MHz to 10 MHz. The non-transitory computer readable storage medium may include an algorithm for modulating the voltage of the photodetector between the first voltage and the second voltage at a frequency of from 0.1 MHz to 1 MHz. The non-transitory computer readable storage medium may include an algorithm for maintaining the voltage of the photodetector for 1 µs or less per period, such as for 0.5 µs or less per period. The first photodetector voltage may be higher than the second photodetector voltage. The first photodetector voltage may be from 500 mV to 2000 mV, such as from 600 mV to 1800 mV. The second photodetector voltage may be from 0.001 mV to 500 mV, such as from 1 mV to 400 mV.

The non-transitory computer readable storage medium may include an algorithm for modulating the voltage of the photodetector between the first photodetector voltage and the second photodetector voltage with a square-form voltage change. The non-transitory computer readable storage medium may include an algorithm for generating data signals from the light detected at the first photodetector voltage. The non-transitory computer readable storage medium may include an algorithm for generating data signals from the light detected at the second photodetector voltage. The non-transitory computer readable storage medium may include an algorithm for generating data signals from the light detected at the first photodetector voltage and light detected at the second photodetector voltage. The non-transitory computer readable storage medium may include an algorithm for generating data signals from the light detected at the second photodetector voltage when the light detected at the first photodetector voltage exhibits detector saturation level greater than a saturation threshold. The non-transitory computer readable storage medium may include an algorithm for generating data signals only from the light detected at the second photodetector voltage when the light detected at the first photodetector voltage exhibits detector saturation level greater than a saturation threshold. The non-transitory computer readable storage medium may include an algorithm for detecting light with the photodetector only at the second photodetector voltage when the light detected at the first photodetector voltage exhibits a detector saturation level greater than a saturation threshold.

The non-transitory computer readable storage medium may include an algorithm for measuring the baseline sample of the generated data signals at each of the first photodetector voltage and at the second photodetector voltage. The non-transitory computer readable storage medium may include an algorithm for generating data signals based on the baseline sample. The non-transitory computer readable storage medium may include an algorithm for measuring the baseline sample at a baseline sampling frequency. The non-transitory computer readable storage medium may include an algorithm for baseline sampling at a frequency of from 0.0001 MHz to 15 MHz. The non-transitory computer readable storage medium may include an algorithm for measuring the baseline sample of the generated data signals at a frequency greater than the modulation frequency. The non-transitory computer readable storage medium may include an algorithm for measuring a baseline sample the generated data signals at a frequency less than the modulation frequency. The non-transitory computer readable storage medium may include an algorithm for measuring the baseline sample the generated data signals at a frequency equal to the modulation frequency. The non-transitory computer readable storage medium may include an algorithm for scaling the generated data signals. The non-transitory computer readable storage medium may include an algorithm for scaling the data signals on a single continuous scale and dividing the generated data signal by a photodetector gain at each photodetector voltage.

The non-transitory computer readable storage medium may include an algorithm for determining one or more parameters of the particles in the sample from data signals generated from light detected at the first photodetector voltage. The non-transitory computer readable storage medium may include an algorithm for determining one or more parameters of the particles in the sample from data signals generated from light detected at the second photodetector voltage. The non-transitory computer readable storage medium may include an algorithm for determining one or more parameters of the particles in the sample from data signals generated from light detected at the first photodetector voltage and light detected at the second photodetector voltage.

The non-transitory computer readable storage medium may be employed on one or more computer systems having a display and operator input device. Operator input devices may, for example, be a keyboard, mouse, or the like. The processing module includes a processor which has access to a memory having instructions stored thereon for performing the steps of the subject methods. The processing module may include an operating system, a graphical user interface (GUI) controller, a system memory, memory storage devices, and input-output controllers, cache memory, a data backup unit, and many other devices. The processor may be a commercially available processor or it may be one of other processors that are or will become available. The processor executes the operating system and the operating system interfaces with firmware and hardware in a well-known manner, and facilitates the processor in coordinating and executing the functions of various computer programs that may be written in a variety of programming languages, such as those mentioned above, other high level or low level languages, as well as combinations thereof, as is known in the art. The operating system, typically in cooperation with the processor, coordinates and executes functions of the other components of the computer. The operating system also provides scheduling, input-output control, file and data management, memory management, and communication control and related services, all in accordance with known techniques.

### KITS

Aspects of the present disclosure further include kits, where kits include storage media such as a magneto-optical disk, CD-ROM, CD-R, magnetic tape, non-volatile memory card, ROM, DVD-ROM, Blue-ray disk, solid state disk, and network attached storage (NAS). Any of these program storage media, or others now in use or that may later be developed, may be included in the subject kits. The program storage media may include instructions for analyzing flow cytometer data as in the methods and for use with the systems described herein. The instructions contained on computer readable media provided in the subject kits, or a portion thereof, can be implemented as software components of a software for analyzing data. Computer-controlled systems according to the instant disclosure may function as a software "plugin" for an existing software package (e.g., FlowJo^{®}).

In addition to the above components, the subject kits may further include) instructions. These instructions may be present in the subject kits in a variety of forms, one or more of which may be present in the kit. One form in which these instructions may be present is as printed information on a suitable medium or substrate, e.g., a piece or pieces of paper on which the information is printed, in the packaging of the kit, in a package insert, and the like. Yet another form of these instructions is a computer readable medium, e.g., diskette, compact disk (CD), portable flash drive, and the like, on which the information has been recorded. Yet another form of these instructions that may be present is a website address which may be used via the internet to access the information at a removed site.

### UTILITY

The subject method, system and computer system find use in a variety of applications where it is desirable to calibrate or optimize a light detection system (e.g., having a photodetector), such as in a particle analyzer. The subject methods and systems also find use for light detection systems that are used to analyze and sort particle components in a sample in a fluid medium, such as a biological sample. The present disclosure also finds use in flow cytometry where it is desirable to provide a flow cytometer with improved cell sorting accuracy, enhanced particle collection, reduced energy consumption, particle charging efficiency, more accurate particle charging and enhanced particle deflection during cell sorting. The present disclosure reduces the need for user input or manual adjustment during sample analysis with a flow cytometer. In the present disclosure, the subject method and system provide fully automated protocols so that adjustments to a flow cytometer during use require little, if any human input.

Notwithstanding the appended claims, the disclosure is also defined by the following clauses:
1. A method comprising:
   irradiating with a light source a sample comprising particles in a flow stream;
   detecting light from the particles in the sample with a light detection system comprising a photodetector, wherein voltage of the photodetector is modulated between a first voltage and a second voltage at a modulation frequency;
   generating data signals from the light detected from the particles at one or more of the first photodetector voltage and at the second photodetector voltage; and
   determining one or more parameters of the particle from the generated data signals.
2. The method according to clause 1, wherein the voltage of the photodetector is modulated between the first voltage and the second voltage at a frequency of from 0.005 MHz to 10 MHz.
3. The method according to clause 2, wherein the voltage of the photodetector is modulated between the first voltage and the second voltage at a frequency of from 0.1 MHz to 1 MHz.
4. The method according to any one of clauses 1-3, wherein the voltage of the photodetector is maintained for 1 µs or less per period.
5. The method according to clause 4, wherein the voltage of the photodetector is maintained for 0.5 µs or less per period.
6. The method according to any one of clauses 1-5, wherein the first photodetector voltage is higher than the second photodetector voltage.
7. The method according to any one of clauses 1-6, wherein the first photodetector voltage is from 500 mV to 2000 mV.
8. The method according to any one of clauses 1-7, wherein the second photodetector voltage is from 0.001 mV to 500 mV.
9. The method according to any one of clauses 1-8, wherein the voltage of the photodetector is modulated between the first photodetector voltage and the second photodetector voltage with a square-form voltage change.
10. The method according to any one of clauses 1-9, wherein the method comprises generating data signals from the light detected at the first photodetector voltage and light detected at the second photodetector voltage.
11. The method according to clause 10, wherein the data signals are generated from the light detected at the second photodetector voltage when the light detected at the first photodetector voltage exhibits a detector saturation level greater than a saturation threshold.
12. The method according to clause 10, wherein the data signals are generated only from the light detected at the second photodetector voltage when the light detected at the first photodetector voltage exhibits a detector saturation level greater than a saturation threshold.
13. The method according to clause 10, wherein the method comprises detecting light with the photodetector only at the second photodetector voltage when the light detected at the first photodetector voltage exhibits a detector saturation level greater than a saturation threshold.
14. The method according to any one of clauses 1-13, wherein the method further comprises measuring a baseline sample at the first photodetector voltage and at the second photodetector voltage, and wherein the data signals are further generated based on the baseline sample.
15. The method according to clause 14, wherein the baseline sample is measured at a baseline sampling frequency.
16. The method according to clause 15, wherein the baseline sampling frequency is 0.0001 MHz to 15 MHz.
17. The method according to any one of clauses 15-16, wherein the baseline sampling frequency is greater than the modulation frequency.
18. The method according to any one of clauses 15-16, wherein the baseline sampling frequency is less than the modulation frequency.
19. The method according to any one of clauses 15-16, wherein the baseline sampling frequency is equal to the modulation frequency.
20. The method according to any one of clauses 1-19, further comprising scaling the generated data signals.
21. The method according to clause 20, wherein the scaling comprises a continuous scaling and comprises dividing the generated data signal by a photodetector gain at each photodetector voltage.
22. The method according to any one of clauses 1-21, wherein the detected light comprises scattered light from particles in the flow stream.
23. The method according to clause 22, wherein the detected light comprises side-scattered light, forward-scattered light or a combination thereof.
24. A system comprising:
   a light source for irradiating a sample comprising particles in a flow stream;
   a light detection system comprising a photodetector for detecting light from the particles in the sample, wherein the photodetector is configured to:
      modulate between a first photodetector voltage and a second photodetector voltage; and
      generate data signals from the light detected from the particles at one or more of the first photodetector voltage and at the second photodetector voltage; and
   a processor comprising memory operably coupled to the processor wherein the memory comprises instructions stored thereon, which when executed by the processor, cause the processor to determine one or more parameters of the particle from the generated data signals.
25. The system according to clause 24, wherein the photodetector comprises a photomultiplier tube (PMT).
26. The system according to clause 24, wherein the photodetector comprises a photodiode.
27. The system according to any one of clauses 24-26, wherein the voltage of the photodetector is modulated between the first voltage and the second voltage at a frequency of from 0.005 MHz to 10 MHz.
28. The system according to clause 27, wherein the voltage of the photodetector is modulated between the first voltage and the second voltage at a frequency of from 0.1 MHz to 1 MHz.
29. The system according to any one of clauses 24-28, wherein the photodetector is configured to maintain the voltage for 1 µs or less per period.
30. The system according to any one of clauses 24-28, wherein the photodetector is configured to maintain the voltage for 0.5 µs or less per period.
31. The system according to any one of clauses 24-30, wherein the first photodetector voltage is higher than the second photodetector voltage.
32. The system according to any one of clauses 24-31, wherein the first photodetector voltage is from 500 mV to 2000 mV.
33. The system according to any one of clauses 24-32 wherein the second photodetector voltage second is from 0.001 mV to 500 mV.
34. The system according to any one of clauses 24-33, wherein the photodetector is configured to modulate between the first photodetector voltage and the second photodetector voltage with a square-form voltage change.
35. The system according to any one of clauses 24-34, wherein the photodetector is configured to generate data signals from the light detected at the first photodetector voltage and from the light detected at the second photodetector voltage.
36. The system according to clause 35, wherein the photodetector is configured to generate data signals from the light detected at the second photodetector voltage when the light detected at the first photodetector voltage exhibits a detector saturation level greater than a saturation threshold.
37. The system according to clause 35, wherein the photodetector is configured to generate data signals only from the light detected at the second photodetector voltage when the light detected at the first photodetector voltage exhibits a detector saturation level greater than a saturation threshold.
38. The system according to any one of clauses 24-37, wherein the memory comprises instructions stored thereon, which when executed by the processor, cause the processor to measure a baseline sample at the first photodetector voltage and at the second photodetector voltage and wherein the memory comprises instructions to generate the data signals based on the baseline sample.
39. The system according to clause 38, wherein the memory comprises instructions stored thereon, which when executed by the processor, cause the processor to measure the baseline sample of the generated data signals at a baseline sampling frequency.
40. The system according to clause 38, wherein the memory comprises instructions stored thereon, which when executed by the processor, cause the processor to measure the baseline sample of the generated data signals at a frequency that is greater than the modulation frequency.
41. The system according to clause 38, wherein the memory comprises instructions stored thereon, which when executed by the processor, cause the processor to measure the baseline sample of the generated data signals at a frequency that is less than the modulation frequency.
42. The system according to clause 38, wherein the memory comprises instructions stored thereon, which when executed by the processor, cause the processor to measure the baseline sample of the generated data signals at a frequency that is equal to the modulation frequency.
43. The system according to any one of clauses 24-42, wherein the memory comprises instructions stored thereon, which when executed by the processor, cause the processor to scale the data signals.
44. The system according to clause 43, wherein the memory comprises instructions stored thereon, which when executed by the processor, cause the processor to scale the data signals on a continuous scale and dividing the generated data signal by a photodetector gain at each photodetector voltage.
45. The system according to any one of clauses 24-44, wherein the photodetector comprises a scattered light detector.
46. The system according to clause 45, wherein the photodetector is a side-scatter photodetector.
47. The system according to clause 45, wherein the photodetector is a front-scatter photodetector.
48. The system according to any one of clauses 24-47, wherein the system is a flow cytometer.
49. A non-transitory computer readable storage medium comprising instructions stored thereon, the instructions comprising:
   algorithm for irradiating with a light source a sample comprising particles in a flow stream;
   algorithm for detecting light from the particles in the sample with a light detection system comprising a photodetector, wherein voltage of the photodetector is modulated between a first voltage and a second voltage at a modulation frequency; and
   algorithm for generating data signals from the light detected from the particles at one or more of the first photodetector voltage and at the second photodetector voltage; and
   algorithm for determining one or more parameters of the particle from the generated data signals.
50. The non-transitory computer readable storage medium according to clause 49, wherein the voltage of the photodetector is modulated between the first voltage and the second voltage at a frequency of from 0.005 MHz to 10 MHz.
51. The non-transitory computer readable storage medium according to clause 49, wherein the voltage of the photodetector is modulated between the first voltage and the second voltage at a frequency of from 0.1 MHz to 1 MHz.
52. The non-transitory computer readable storage medium according to any one of clauses 49-51, wherein the voltage of the photodetector is maintained for 1 µs or less per period.
53. The non-transitory computer readable storage medium according to clause 52, wherein the voltage of the photodetector is maintained for 0.5 µs or less per period.
54. The non-transitory computer readable storage medium according to any one of clauses 49-53, wherein the first photodetector voltage is higher than the second photodetector voltage.
55. The non-transitory computer readable storage medium according to any one of clauses 49-54, wherein the first photodetector voltage is from 500 mV to 2000 mV.
56. The non-transitory computer readable storage medium according to any one of clauses 49-55, wherein the second photodetector voltage second is from 0.001 mV to 500 mV.
57. The non-transitory computer readable storage medium according to any one of clauses 49-56, wherein the voltage of the photodetector is modulated between the first photodetector voltage and the second photodetector voltage with a square-form voltage change.
58. The non-transitory computer readable storage medium according to any one of clauses 49-57, wherein the non-transitory computer readable storage medium comprises algorithm for generating data signals from the light detected at the first photodetector voltage and at the second photodetector voltage.
59. The non-transitory computer readable storage medium according to clause 58, wherein the non-transitory computer readable storage medium comprises algorithm for generating data signals from the measured light at the second photodetector voltage when the light detected at the first photodetector voltage exhibits a detector saturation level greater than a saturation threshold.
60. The non-transitory computer readable storage medium according to clause 59, wherein the non-transitory computer readable storage medium comprises algorithm for measuring light with the photodetector only at the second photodetector voltage when the light detected at the first photodetector voltage exhibits a detector saturation level greater than a saturation threshold.
61. The non-transitory computer readable storage medium according to any one of clauses 49-60, wherein the non-transitory computer readable storage medium comprises algorithm for measuring a baseline sample at the first photodetector voltage and at the second photodetector voltage and algorithm for generating the data signals based on the baseline sample.
62. The non-transitory computer readable storage medium according to clause 61, wherein the non-transitory computer readable storage medium comprises algorithm for measuring the baseline sample of the generated data signals at a baseline sampling frequency.
63. The non-transitory computer readable storage medium according to clause 62, wherein the non-transitory computer readable storage medium comprises algorithm for baseline sampling at a frequency of from 0.0001 MHz to 15 MHz.
64. The non-transitory computer readable storage medium according to clause 62, wherein the non-transitory computer readable storage medium comprises algorithm for measuring the baseline sample at a frequency greater than the modulation frequency.
65. The non-transitory computer readable storage medium according to clause 62, wherein the non-transitory computer readable storage medium comprises algorithm for measuring the baseline sample at a frequency less than the modulation frequency.
66. The non-transitory computer readable storage medium according to clause 62, wherein the non-transitory computer readable storage medium comprises algorithm for measuring the baseline sample at a frequency equal to the modulation frequency.
67. The non-transitory computer readable storage medium according to any one of clauses 49-66, wherein the non-transitory computer readable storage medium comprises algorithm for scaling the generated data signals.
68. The non-transitory computer readable storage medium according to clause 67, wherein the non-transitory computer readable storage medium comprises algorithm for scaling the data signals on a continuous scale and dividing the generated data signal by a photodetector gain at each photodetector voltage.

Although the foregoing disclosure has been described in some detail by way of illustration and example for purposes of clarity of understanding, it is readily apparent to those of ordinary skill in the art in light of the teachings of this disclosure that some changes and modifications may be made thereto without departing from the scope of the appended claims.

Accordingly, the preceding merely illustrates the principles of the disclosure. It will be appreciated that those skilled in the art will be able to devise various arrangements which, although not explicitly described or shown herein, embody the principles of the disclosure and are included within its spirit and scope. Furthermore, all examples and conditional language recited herein are principally intended to aid the reader in understanding the principles of the disclosure and the concepts contributed by the disclosure to furthering the art and are to be construed as being without limitation to such specifically recited examples and conditions. Moreover, all statements herein reciting principles, aspects, of the disclosure as well as specific examples thereof, are intended to encompass both structural and functional equivalents thereof. Additionally, it is intended that such equivalents include both currently known equivalents and equivalents developed in the future, i.e., any elements developed that perform the same function, regardless of structure. Moreover, nothing disclosed herein is intended to be dedicated to the public regardless of whether such disclosure is explicitly recited in the claims.

## Claims

1. A method comprising:
irradiating with a light source a sample comprising particles in a flow stream;
detecting light from the particles in the sample with a light detection system comprising a photodetector, wherein voltage of the photodetector is modulated between a first voltage and a second voltage at a modulation frequency;
generating data signals from the light detected from the particles at one or more of the first photodetector voltage and at the second photodetector voltage; and
determining one or more parameters of the particle from the generated data signals.

2. The method according to claim 1, wherein the voltage of the photodetector is modulated between the first voltage and the second voltage at a frequency of from 0.005 MHz to 10 MHz, preferably wherein the voltage of the photodetector is modulated between the first voltage and the second voltage at a frequency of from 0.1 MHz to 1 MHz.

3. The method according to any one of claims 1 or 2, wherein the voltage of the photodetector is maintained for 1 µs or less per period, preferably wherein the voltage of the photodetector is maintained for 0.5 µs or less per period.

4. The method according to any one of claims 1-3, wherein the first photodetector voltage is higher than the second photodetector voltage.

5. The method according to any one of claims 1-4, wherein the first photodetector voltage is from 500 mV to 2000 mV.

6. The method according to any one of claims 1-5, wherein the second photodetector voltage is from 0.001 mV to 500 mV.

7. The method according to any one of the preceding claims, wherein the voltage of the photodetector is modulated between the first photodetector voltage and the second photodetector voltage with a square-form voltage change.

8. The method according to any one of the preceding claims, wherein the method comprises generating data signals from the light detected at the first photodetector voltage and light detected at the second photodetector voltage, preferably wherein:
(a) the data signals are generated from the light detected at the second photodetector voltage when the light detected at the first photodetector voltage exhibits a detector saturation level greater than a saturation threshold;
(b) the data signals are generated only from the light detected at the second photodetector voltage when the light detected at the first photodetector voltage exhibits a detector saturation level greater than a saturation threshold; or
(c) the method comprises detecting light with the photodetector only at the second photodetector voltage when the light detected at the first photodetector voltage exhibits a detector saturation level greater than a saturation threshold.

9. The method according to any one of claims 1-8, wherein the method further comprises measuring a baseline sample at the first photodetector voltage and at the second photodetector voltage, and wherein the data signals are further generated based on the baseline sample.

10. The method according to claim 9, wherein the baseline sample is measured at a baseline sampling frequency, more preferably wherein the baseline sampling frequency is 0.0001 MHz to 15 MHz.

11. The method according to claim 10, wherein:
the baseline sampling frequency is greater than the modulation frequency;
the baseline sampling frequency is less than the modulation frequency; or
the baseline sampling frequency is equal to the modulation frequency.

12. The method according to any one of claims 1-11, further comprising scaling the generated data signals, preferably wherein the scaling comprises a continuous scaling and comprises dividing the generated data signal by a photodetector gain at each photodetector voltage.

13. The method according to any one of claims 1-12, wherein the detected light comprises scattered light from particles in the flow stream, preferably wherein the detected light comprises side-scattered light, forward-scattered light or a combination thereof.

14. A system comprising:
a light source for irradiating a sample comprising particles in a flow stream;
a light detection system comprising a photodetector for detecting light from the particles in the sample, wherein the photodetector is configured to:
modulate between a first photodetector voltage and a second photodetector voltage; and
generate data signals from the light detected from the particles at one or more of the first photodetector voltage and at the second photodetector voltage; and
a processor comprising memory operably coupled to the processor wherein the memory comprises instructions stored thereon, which when executed by the processor, cause the processor to determine one or more parameters of the particle from the generated data signals.

15. The system of claim 14 for use in a method according to any of the claims 1-14.
